(19) Europäisches Patentamt
European Patent Office
Office européen des brevets

(11) EP 4 109 407 A1

(12) EUROPEAN PATENT APPLICATION
published in accordance with Art. 153(4) EPC

(43) Date of publication:
28.12.2022 Bulletin 2022/52

(51) International Patent Classification (IPC):
G06T 11/80 (2006.01)    G06F 3/0484 (2022.01)

(21) Application number: 21756524.1

(52) Cooperative Patent Classification (CPC):
G06F 3/0484; G06T 11/80

(22) Date of filing: 05.02.2021

(86) International application number:
PCT/JP2021/004355

(87) International publication number:
WO 2021/166690 (26.08.2021 Gazette 2021/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.02.2020   JP 2020026320

(71) Applicant: Sony Group Corporation
Tokyo 108-0075 (JP)

(72) Inventor: KUSHIDA Hidenori
Tokyo 108-0075 (JP)

(74) Representative: D Young & Co LLP
120 Holborn
London EC1N 2DY (GB)

(54) INFORMATION PROCESSING DEVICE AND METHOD, AND PROGRAM

(57) The present disclosure relates to an information processing apparatus, an information processing method, and a program capable of performing a process for a desired depth value range of depth data.

A maximum value and a minimum value of depth values of depth data corresponding to image data are set to thereby set a depth value range from the minimum value to the maximum value. A mask for the depth data is generated according to the depth value range thus set. For example, the present disclosure is applicable to an information processing apparatus, electronic equipment, an information processing method, a program, or the like.

FIG.16

EP 4 109 407 A1

**Description**

[Technical Field]

The present disclosure relates to an information processing apparatus, an information processing method, and a program, and particularly to an information processing apparatus, an information processing method, and a program capable of performing a process for a desired depth value range of depth data.

[Background Art]

There is such a conventional method that converts depth data into images and displays the images while varying hues according to distances in a depth direction (see PTL 1, for example). There is also such a method that creates a three-dimensional model on the basis of a depth map and RGB data (see PTL 2, for example). There is further such a method that defines a threshold and creates a three-dimensional model only for pixels located on a front side with respect to the threshold (see PTL 3, for example).

[Citation List]

[Patent Literature]

[PTL 1]
Japanese Patent Laid-open No. 1991-269680
[PTL 2]
Japanese Patent Laid-open No. 2014-67372
[PTL 3]
Japanese Patent Laid-open No. 2016-71645

[Summary]

[Technical Problem]

According to the methods described in PTL 1 to PTL 3, however, a depth value range cannot be set as desired, and therefore, it is not possible to perform processing for a desired depth value range of depth data.
The present disclosure has been developed in consideration of the above-described circumstances and achieves processing for a desired depth value range of depth data.

[Solution to Problem]

An information apparatus according to an aspect of the present technology is an imaging apparatus including a depth value range setting unit that sets a maximum value and a minimum value of depth values of depth data corresponding to image data, to thereby set a depth value range from the minimum value to the maximum value, and a mask generation unit that generates a mask for the depth data according to the depth value range set by the depth value range setting unit.
An information processing method according to an aspect of the present technology is an information processing method including setting a maximum value and a minimum value of depth values of depth data corresponding to image data, to thereby set a depth value range from the minimum value to the maximum value, and generating a mask for the depth data according to the depth value range thus set.
A program according to an aspect of the present technology is a program for causing a computer to function as a depth value range setting unit that sets a maximum value and a minimum value of depth values of depth data corresponding to image data, to thereby set a depth value range from the minimum value to the maximum value, and a mask generation unit that generates a mask for the depth data according to the depth value range set by the depth value range setting unit.
In the information processing apparatus, the information processing method, and the program according to one aspect of the present technology, a maximum value and a minimum value of depth values of depth data corresponding to image data are set to thereby set a depth value range from the minimum value to the maximum value, and a mask for the depth data is generated according to the depth value range thus set.

**EP 4 109 407 A1**

[Brief Description of Drawings]

[FIG. 1]

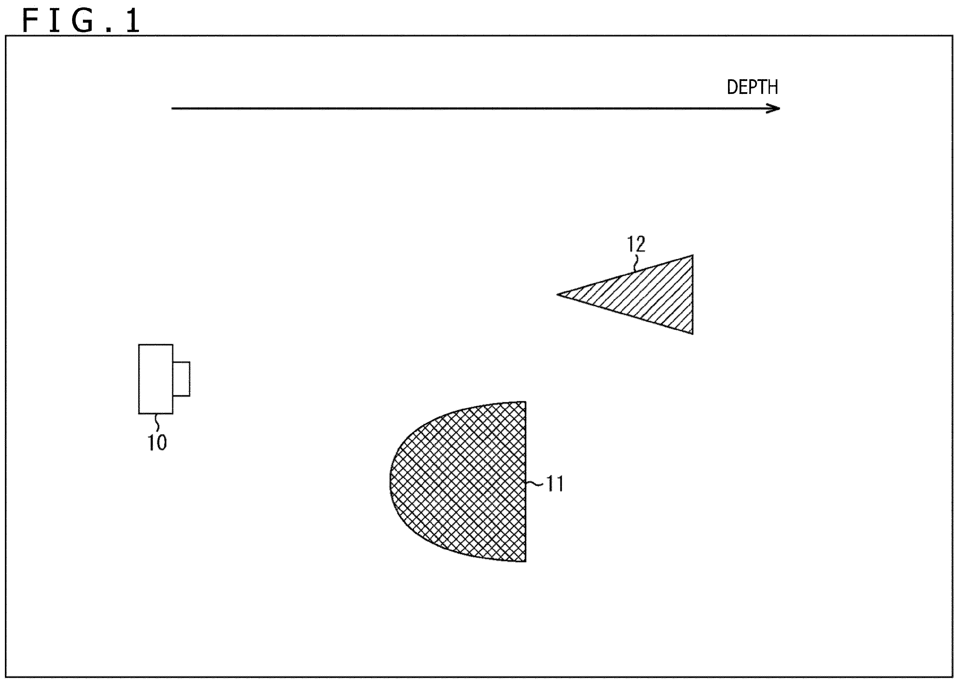

FIG. 1 is a diagram depicting an example of a state of imaging.
[FIG. 2]

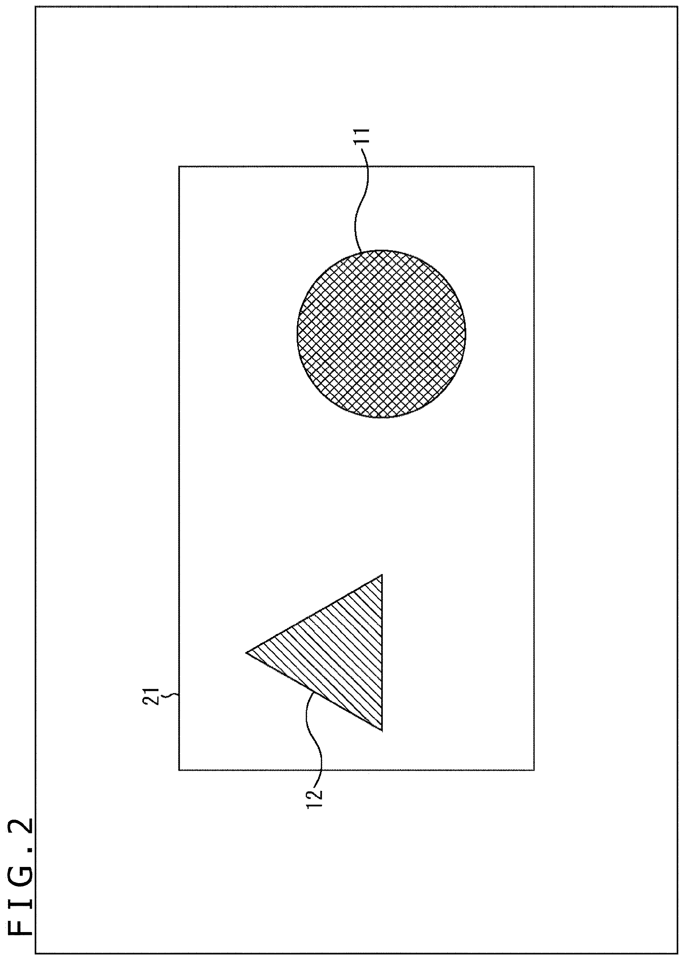

FIG. 2 is a diagram depicting an example of an RGB image.
[FIG. 3]

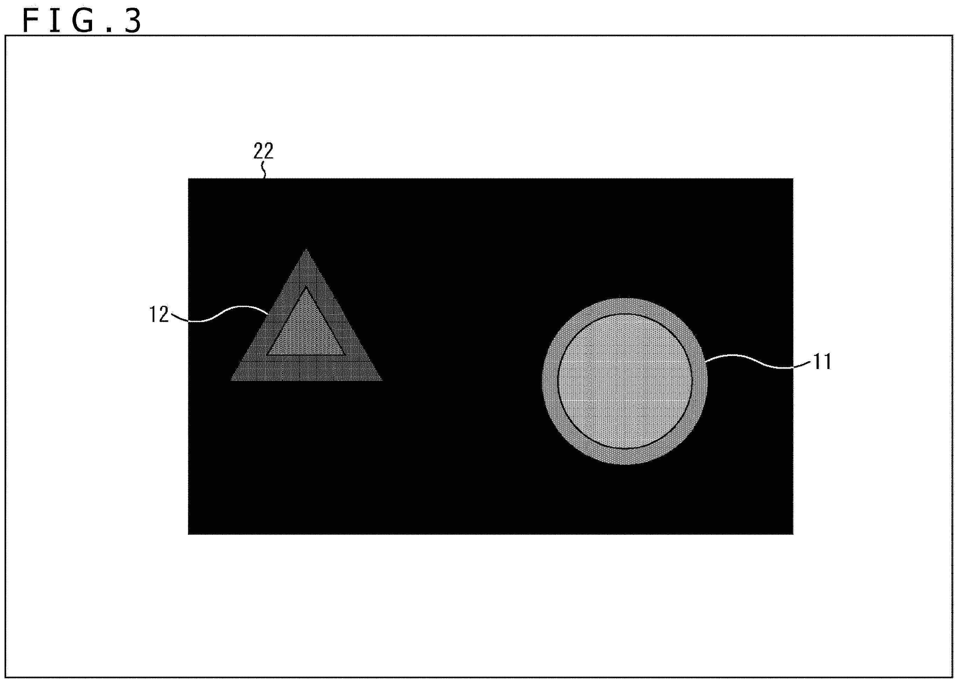

FIG. 3 is a diagram depicting an example of a depth image.
[FIG. 4]

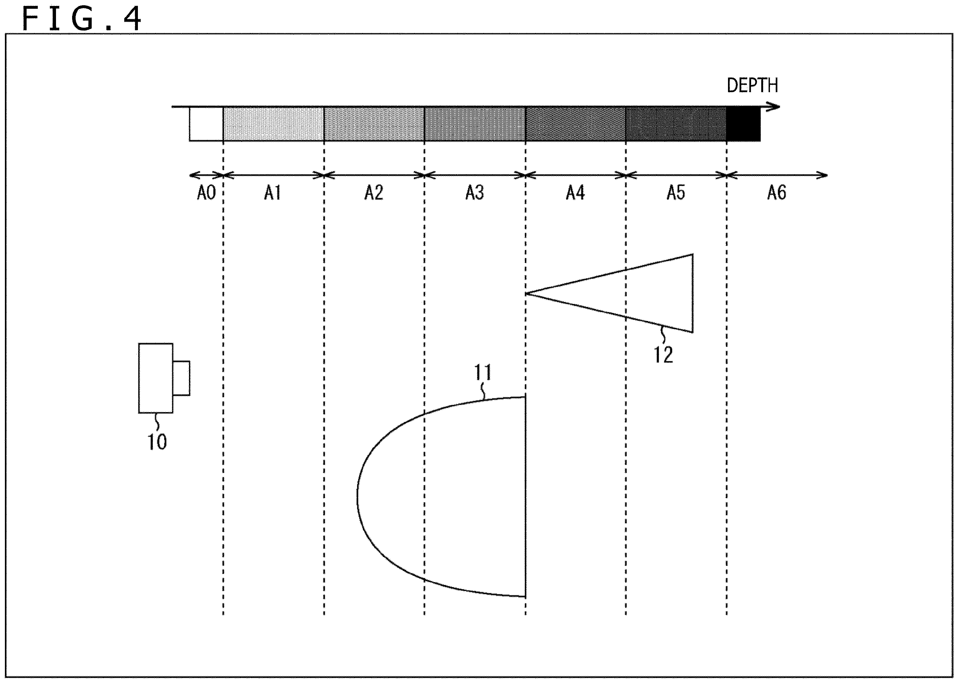

FIG. 4 is a diagram depicting an example of allocation of hues to depth values.
[FIG. 5]

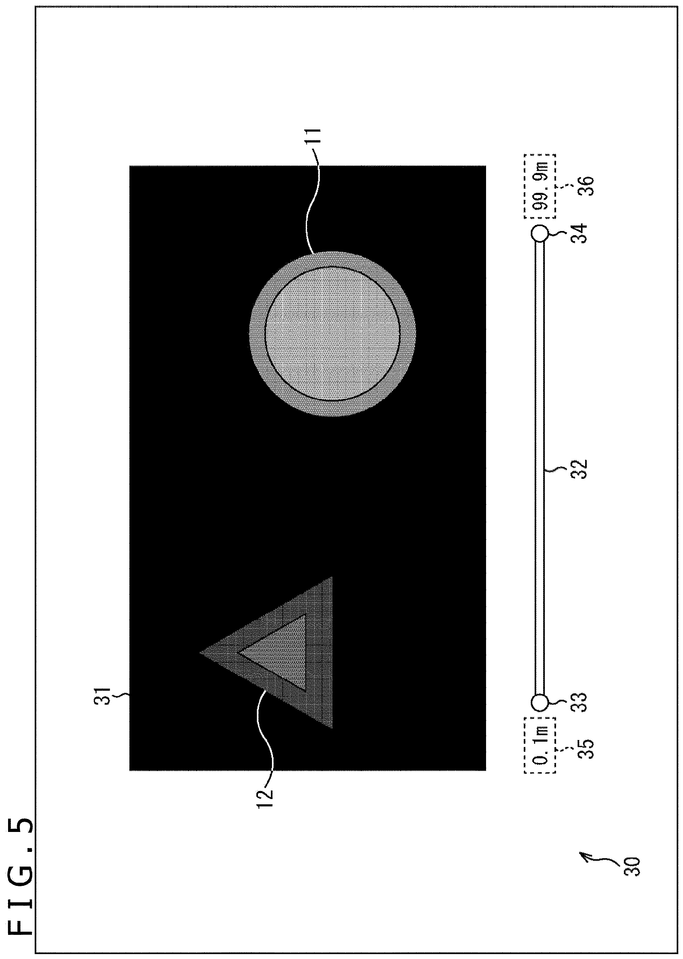

FIG. 5 is a diagram depicting an example of a display image.
[FIG. 6]

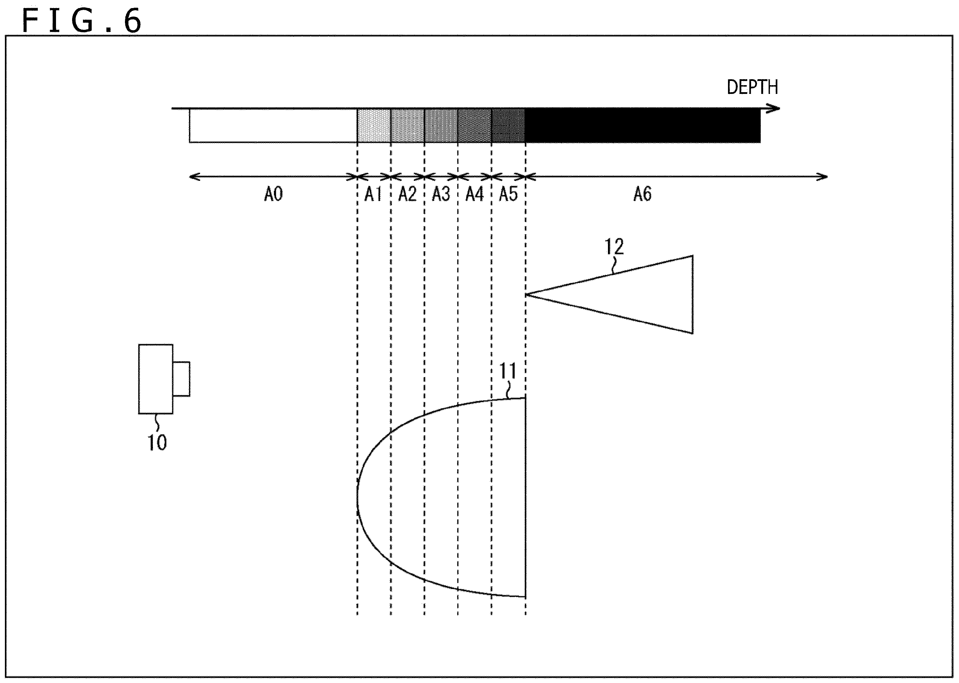

FIG. 6 is a diagram depicting an example of allocation of hues to depth values.
[FIG. 7]

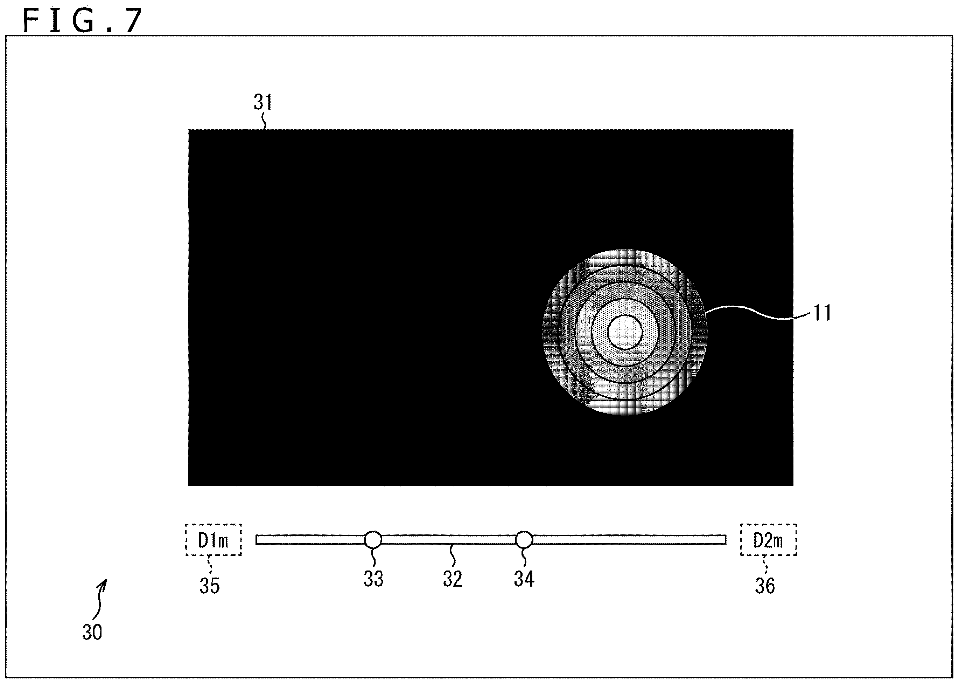

FIG. 7 is a diagram depicting an example of a display image.
[FIG. 8]

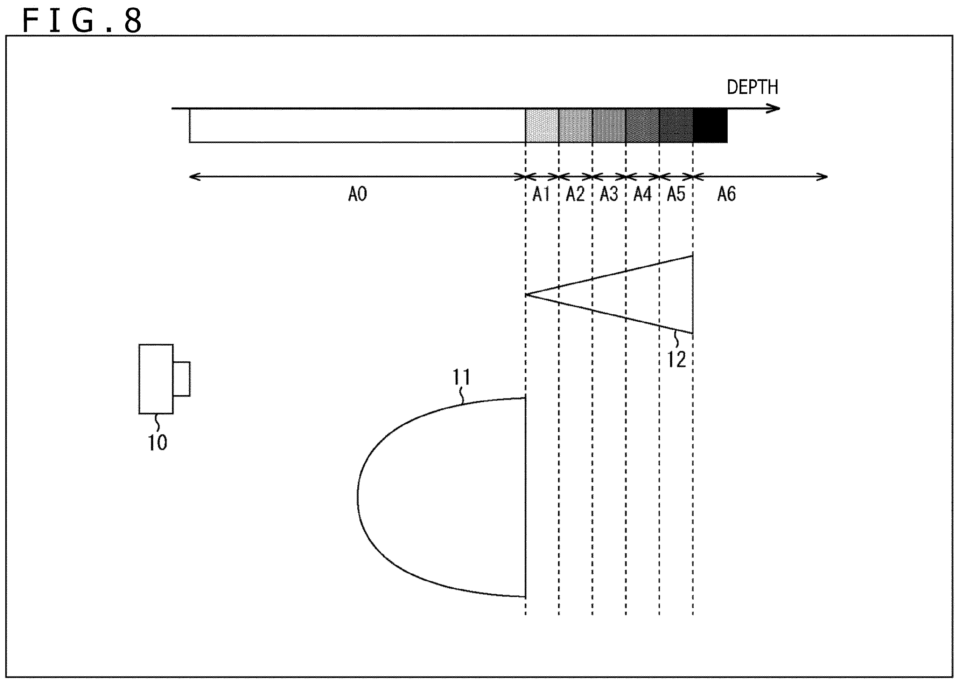

FIG. 8 is a diagram depicting an example of allocation of hues to depth values.
[FIG. 9]

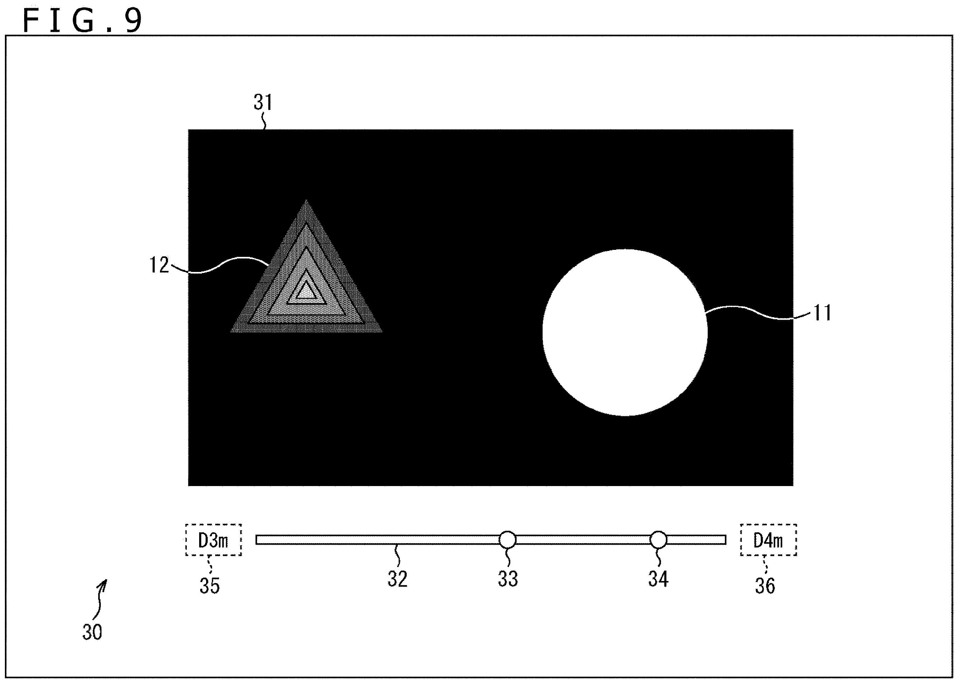

FIG. 9 is a diagram depicting an example of a display image.
[FIG. 10]

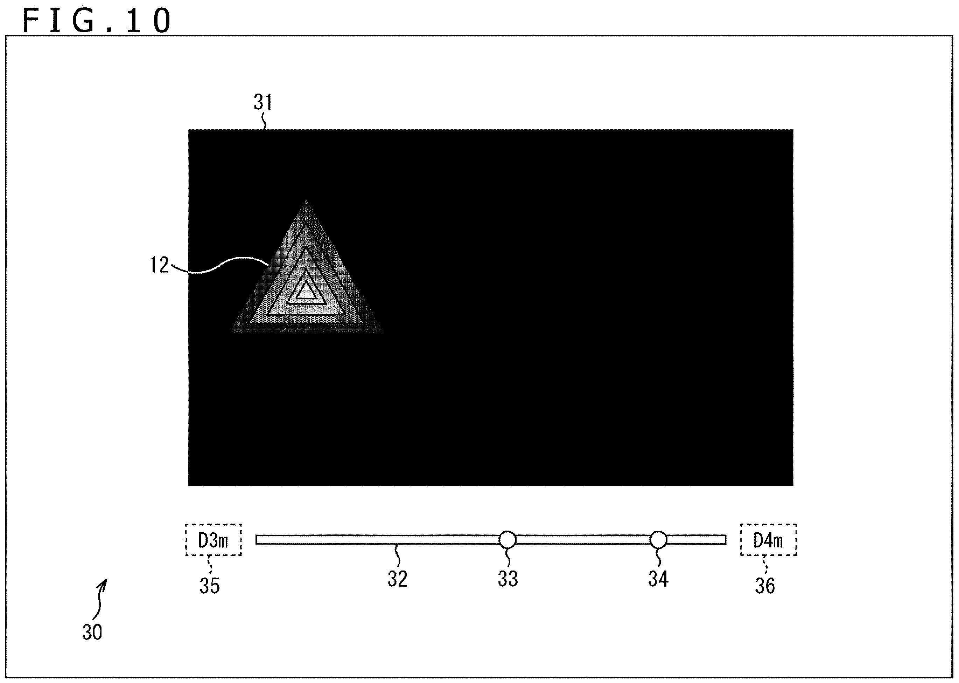

FIG. 10 is a diagram depicting an example of a display image.
[FIG. 11]

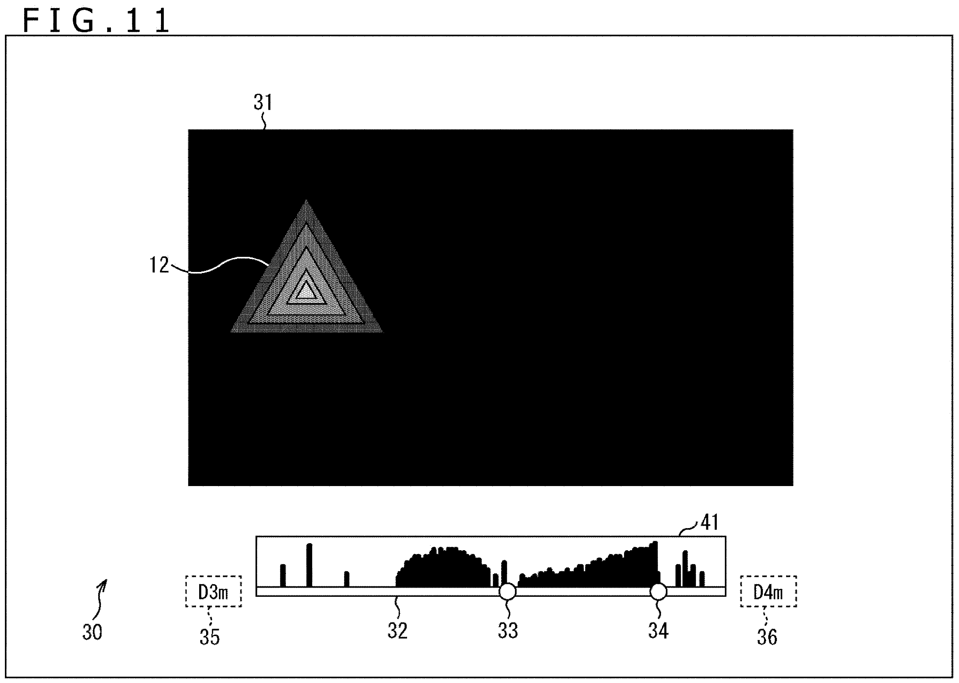

FIG. 11 is a diagram depicting an example of a display image.
[FIG. 12]

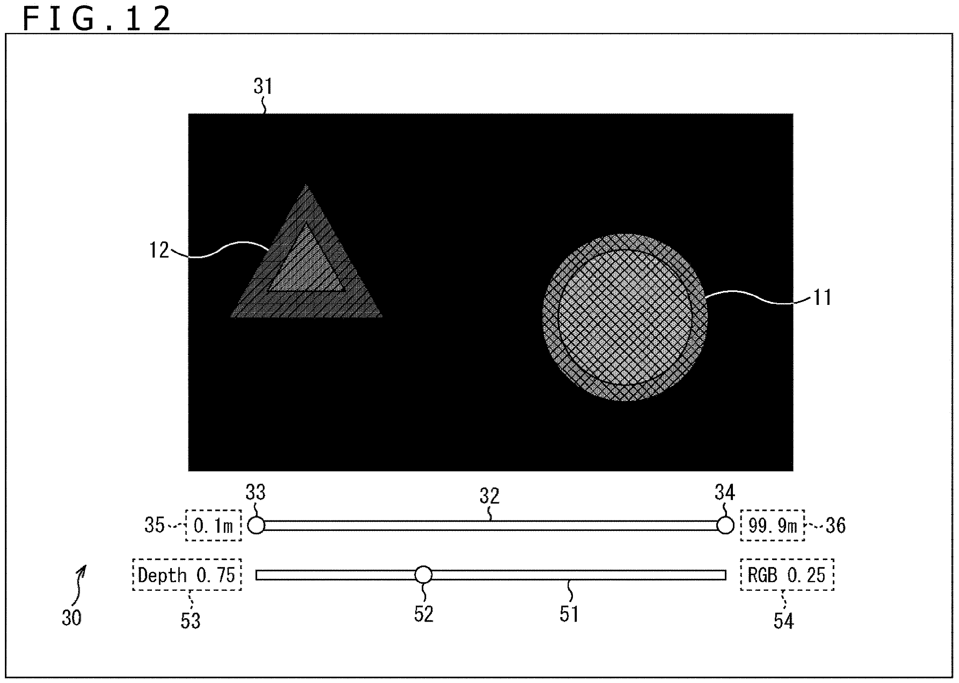

FIG. 12 is a diagram depicting an example of a display image.
[FIG. 13]

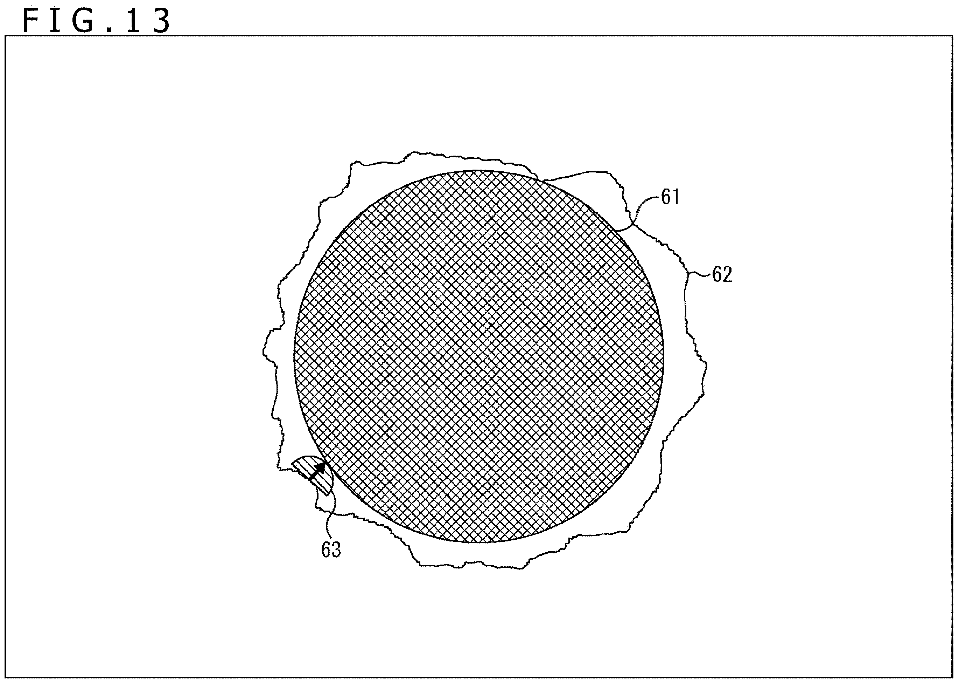

FIG. 13 is a diagram explaining an erosion process.
[FIG. 14]

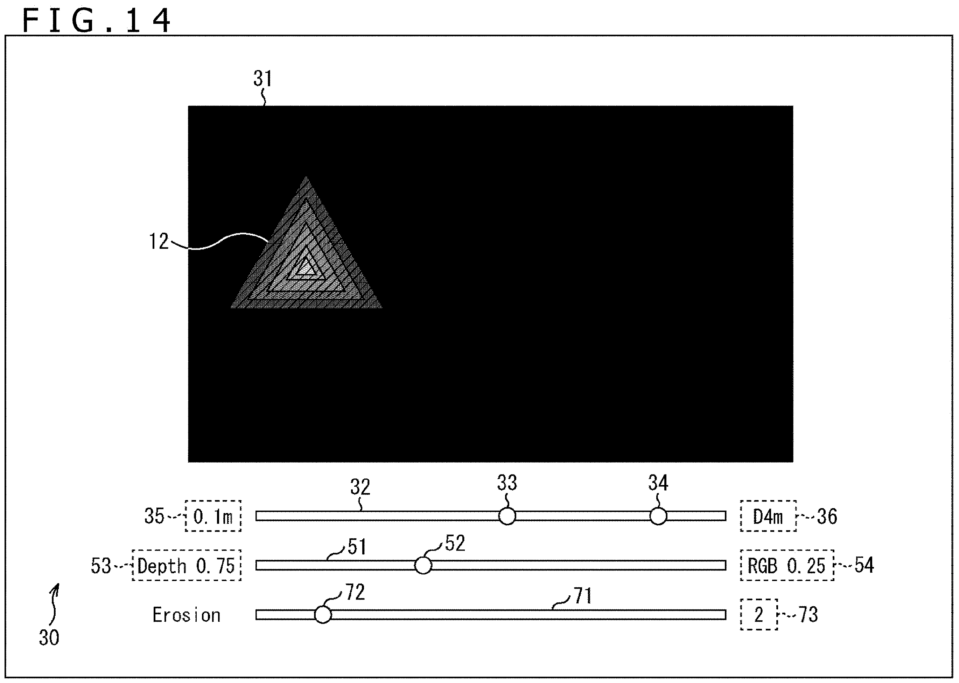

FIG. 14 is a diagram depicting an example of a display image.
[FIG. 15]

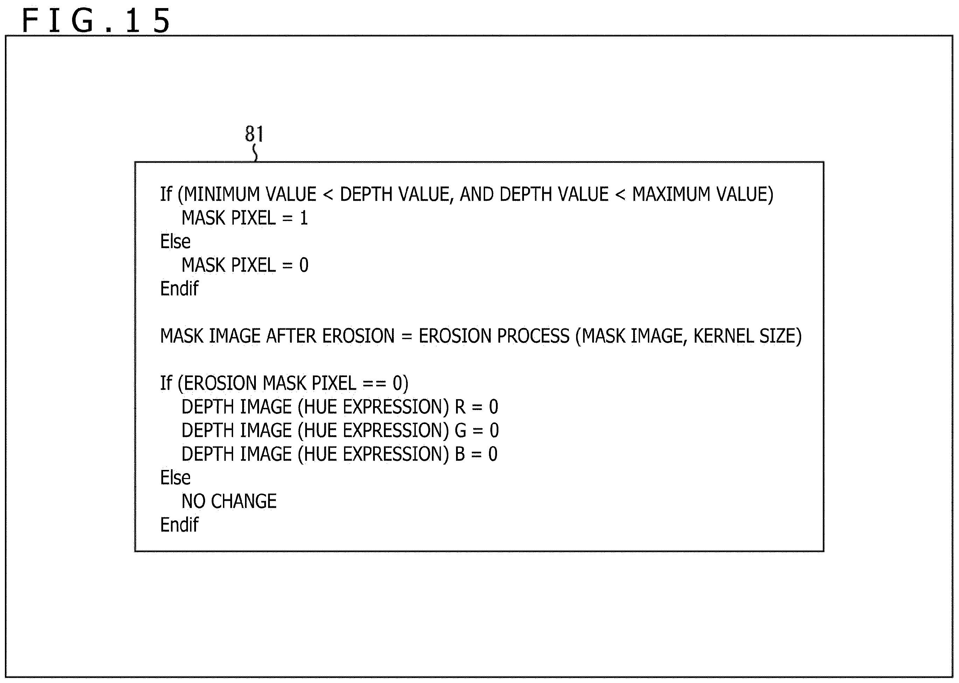

FIG. 15 is a diagram depicting an example of syntax.
[FIG. 16]

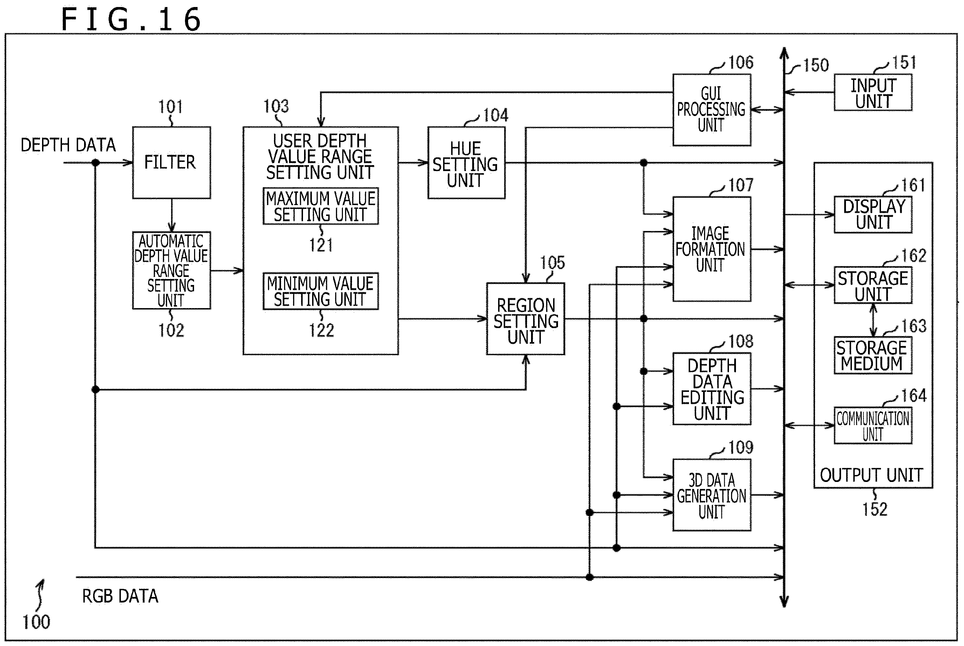

FIG. 16 is a block diagram depicting an example of a main configuration of a depth data processing apparatus according to an embodiment.
[FIG. 17]

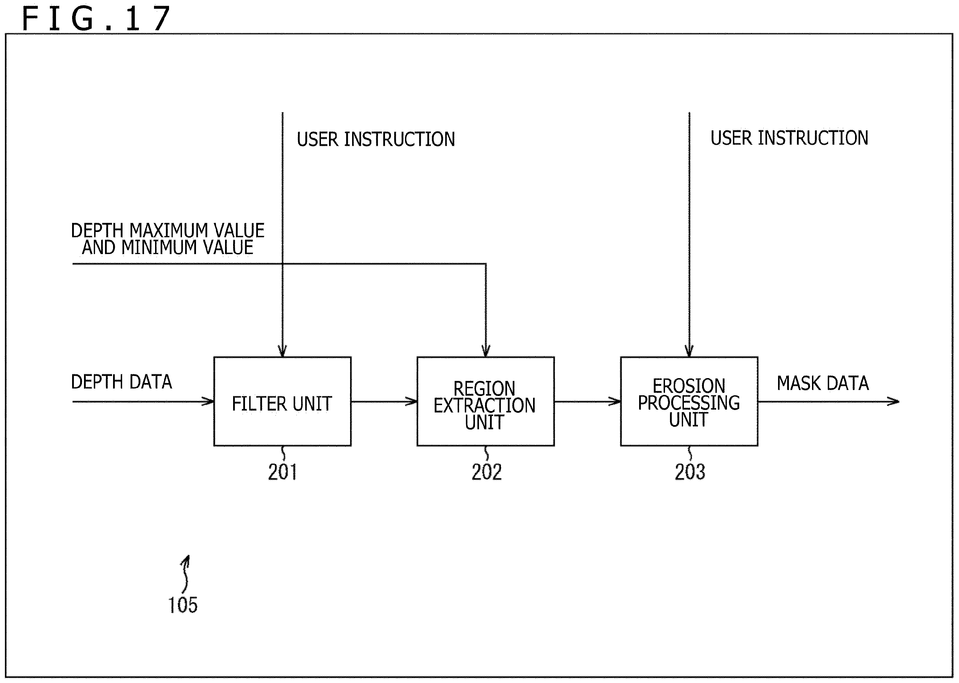

FIG. 17 is a block diagram depicting an example of a main configuration of a region setting unit.
[FIG. 18]

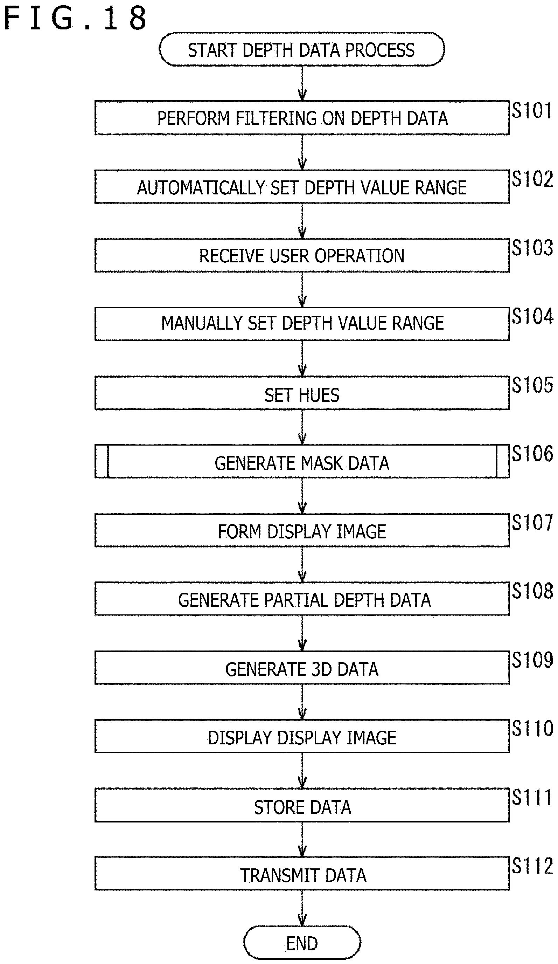

FIG. 18 is a flowchart explaining an example of a flow of a depth data process.
[FIG. 19]

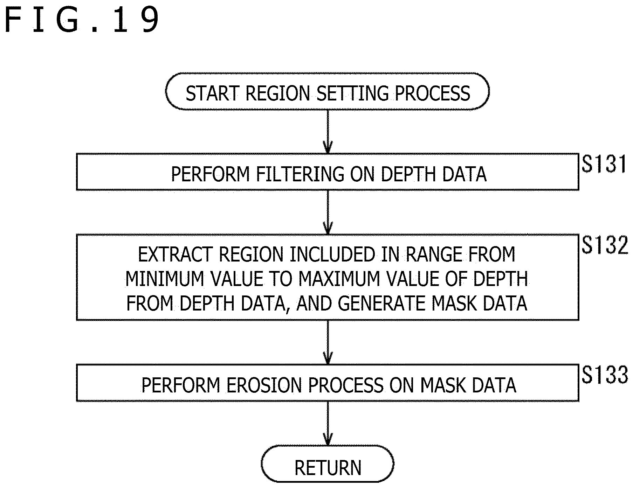

FIG. 19 is a flowchart explaining an example of a flow of a region setting process.
[FIG. 20]

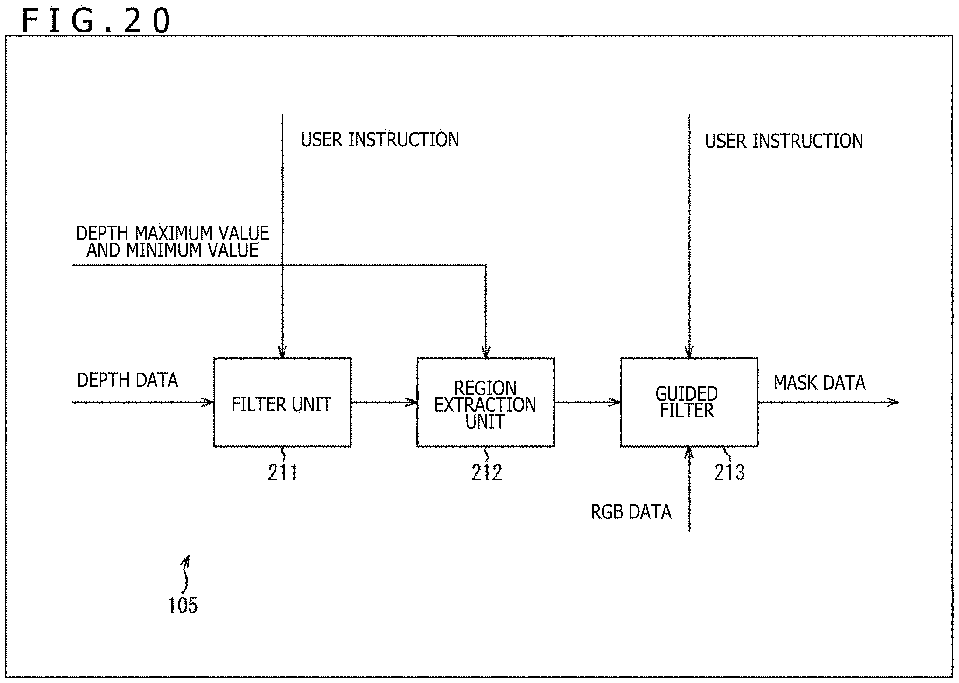

FIG. 20 is a block diagram depicting an example of a main configuration of a region setting unit.
[FIG. 21]

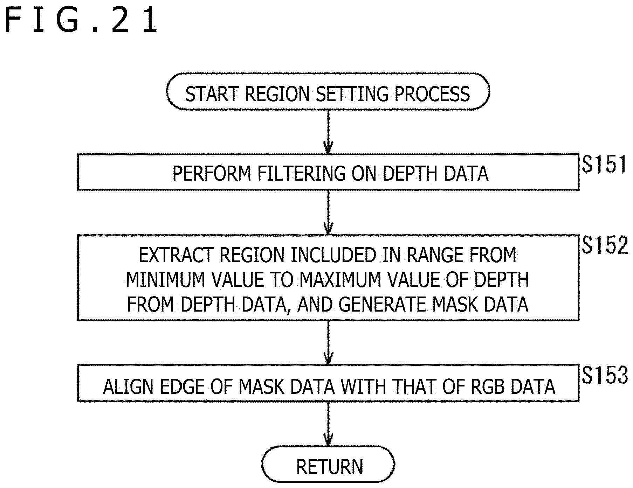

FIG. 21 is a flowchart explaining an example of a flow of a region setting process.
[FIG. 22]

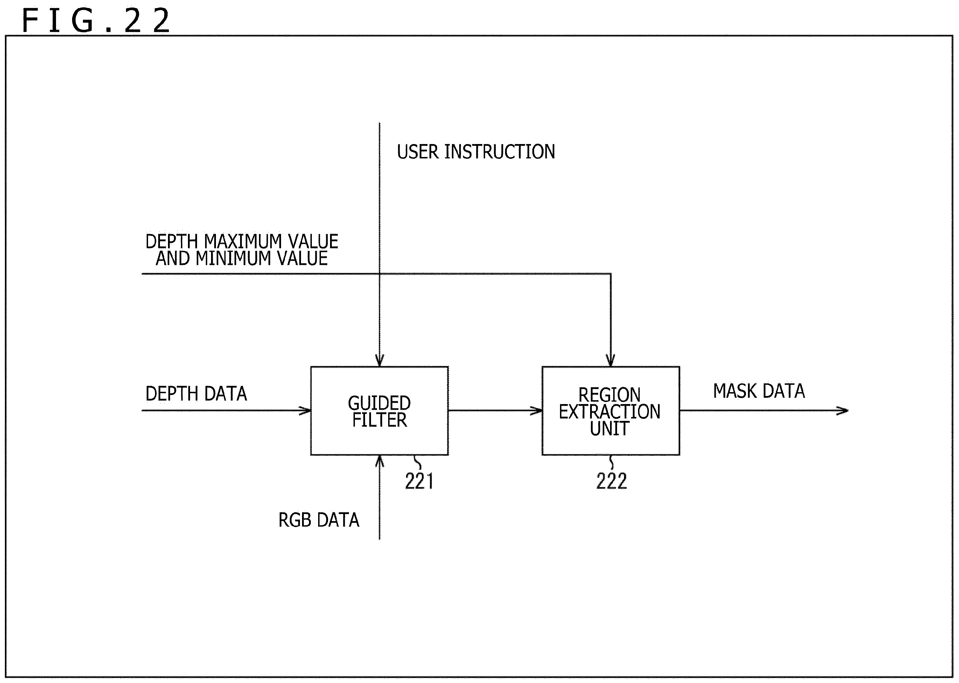

FIG. 22 is a block diagram depicting an example of a main configuration of a region setting unit.
[FIG. 23]

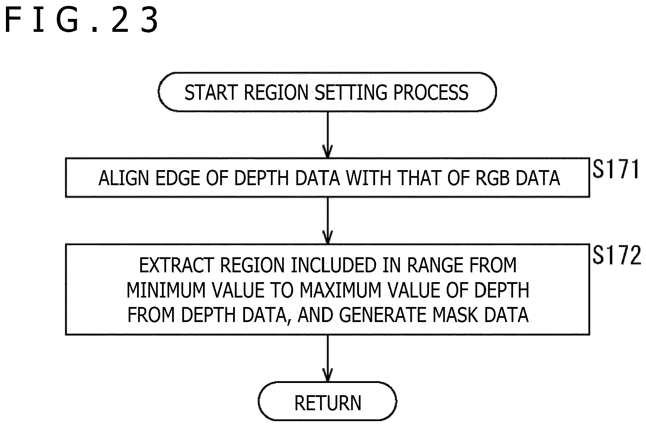

FIG. 23 is a flowchart explaining an example of a flow of a region setting process.
[FIG. 24]

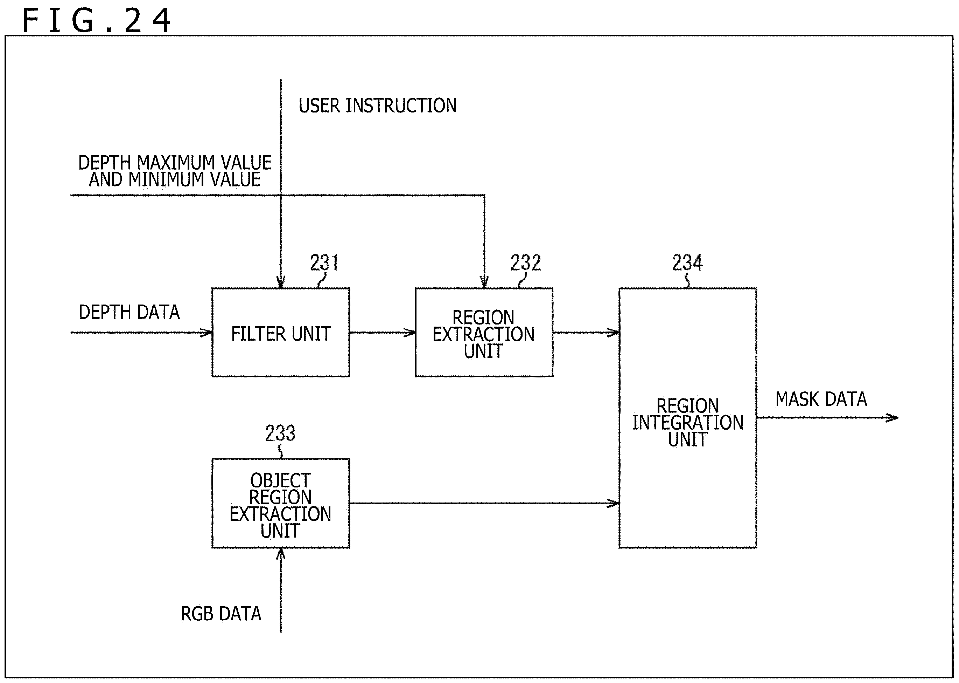

FIG. 24 is a block diagram depicting an example of a main configuration of a region setting unit.
[FIG. 25]

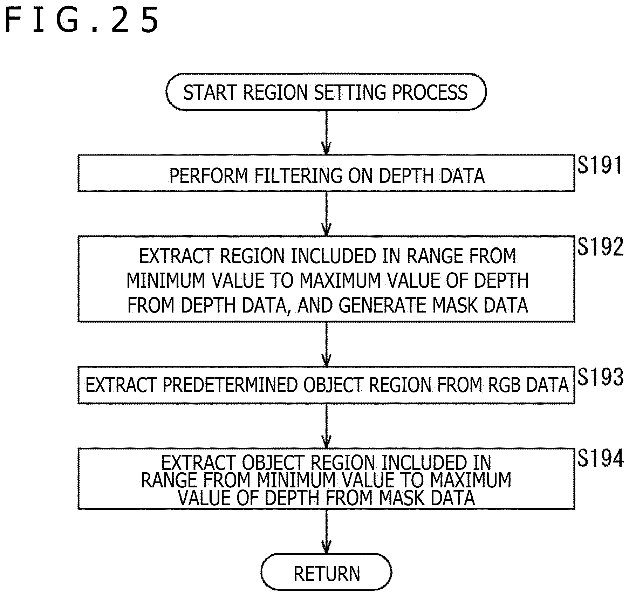

FIG. 25 is a flowchart explaining an example of a flow of a region setting process.
[FIG. 26]

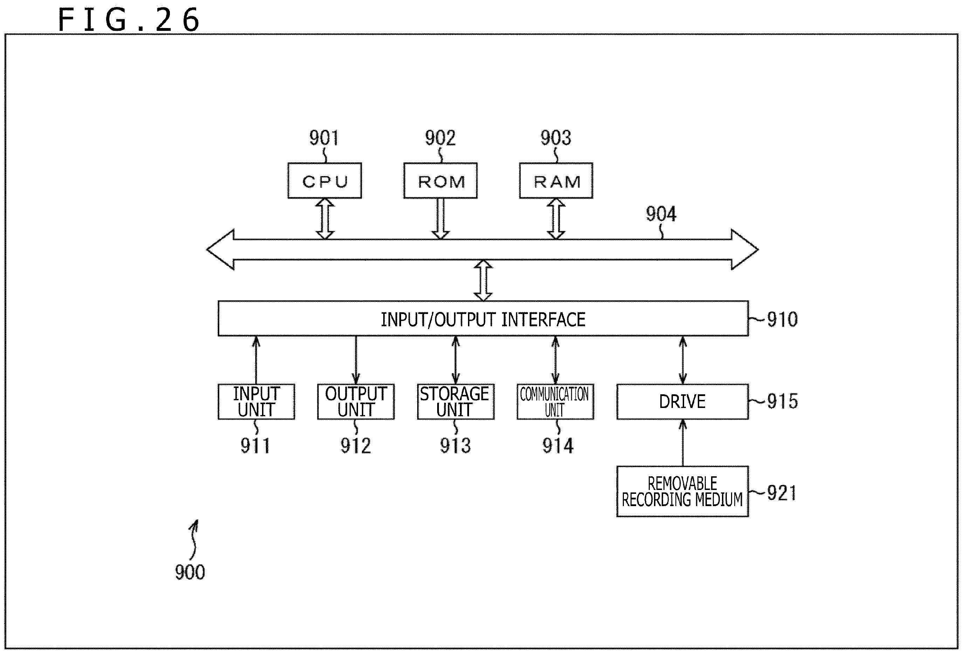

FIG. 26 is a block diagram depicting an example of a main configuration of a computer.

[Description of Embodiment]

A mode for carrying out the present disclosure (hereinafter referred to as an embodiment) will be hereinafter described. Note that the description will be presented in the following order.

    1. Depth value range setting and processing control based on depth value range
    2. First embodiment (depth data processing apparatus)
    3. Supplementary notes

<1. Depth value range setting and processing control based on depth value range>

<Depth data>

FIG. 1 is a diagram depicting an example of a state of imaging. FIG. 1 depicts a state where images of an object 11 and an object 12 are captured by a camera 10. For example, assuming that the camera 10 is able to capture images from multiple viewpoints with disparity produced in each image, depth data (RGB-D) indicating distances to the objects can be acquired by using these captured images.

Moreover, there exists an apparatus or a system which edits the depth data thus acquired. In this case, for example, the apparatus or the system converts the depth data into images and displays the images as depth images to allow a user to check the images or receive processing for the displayed depth images. For example, PTL 1 discloses a method which converts depth data into images and displays the images while varying hues according to distances in a depth direction.

Further, various types of processing can be performed using the depth data. For example, PTL 2 discloses a method which creates a three-dimensional model by using such a depth image (also referred to as a depth map) and RGB data. Note that PTL 3 discloses a method which defines a threshold and creates a three-dimensional model only for pixels located on a front side with respect to the threshold.

According to the methods described in PTL 1 to PTL 3, however, a depth value range cannot be set as desired, and therefore, it is not possible to perform processing for a desired depth value range of depth data.

For example, each of PTL 1 and PTL 2 does not describe nor suggest setting of a depth value range. In addition, PTL 3 presents a threshold which is a fixed value. Accordingly, a depth value range cannot be set as desired by using this method.

<Depth image>

For example, it is assumed that an RGB image 21 depicted in FIG. 2 and a depth image 22 depicted in FIG. 3 are captured by imaging by the camera 10 in FIG. 1. The RGB image 21 in FIG. 2 is what is generally called a captured image (RAW image) and is an image corresponding to RGB data including pixel values of R pixels, G pixels, and B pixels. The depth image 22 in FIG. 3 is an image of depth data corresponding to the RGB image 21, as an image formed by allocating colors to respective depth values of the depth data. In other words, the depth image 22 is map information which expresses distances (depth values) with respect to the objects at respective pixels of the RGB image 21 by using colors (pixel values) of the respective pixels.

Note that the RGB image is not limited to a RAW image having a Bayer array. Moreover, a color space of the captured image may be freely determined, and the captured image is not limited to an RGB image. For example, the captured image may be an image of another type such as YUV, YCbCr, or YPbPr. Further, the captured image is not limited to a color image. For example, the captured image may be a single-color image such as a monochromatic image or a sepia-toning image. In other words, the RGB image 21 may be any image in a form of an image.

In the case of the example in FIG. 3, colors are equally allocated to depth values from a nearest neighbor of the camera 10 to infinity as depicted in FIG. 4. In the case of the example in FIG. 4, depth values from the nearest neighbor of the camera 10 to infinity are divided into regions +A0 to A6, and colors different from each other are allocated to the respective regions. That is, the entire depth values (from the nearest neighbor to infinity) are expressed in seven colors. Note that, while white, gray, and black are allocated to the respective regions in FIG. 4, the colors allocated to the respective regions are not limited to the colors of this example and may be any colors. Moreover, patterns may be used instead of colors. Furthermore, combinations of colors and patterns may be used.

However, the depth image is an image expressing depth values as colors as described above. Accordingly, hues need to be allocated to the depth values on the basis of predetermined regularity (e.g., the color changes from cool colors to warm colors with an increase in the depth value), so that each depth value can be estimated from the corresponding color.

In the case of hue setting depicted in FIG. 4, the object 11 and the object 12 are each expressed in only two colors in the depth image 22 as depicted in FIG. 3. Accordingly, it is difficult for the user to recognize solidity (feeling of depth) of each of the object 11 and the object 12.

Even if hue resolution for the depth values in FIG. 4 is raised, since setting of hues is provided on the basis of predetermined regularity as described above, colors close to each other generally tend to be allocated to depth values close to each other. Accordingly, even when the number of colors allocated to the object 11 and the object 12 increases, a width of the colors (a maximum color difference) does not greatly change from that in the case of the two colors depicted in FIG. 3. Therefore, it is difficult for the user to recognize solidity (feeling of depth) of each of the objects in the depth image 22 similarly to the case of FIG. 3.

In the case of the methods described in PTL 1 and PTL 2, hues are equally allocated to the entire depth values (from the nearest neighbor of the camera 10 to infinity) as in the example in FIG. 4. Therefore, it is difficult for the user to recognize solidity (feeling of depth) of each of the objects in the depth image 22 as depicted in FIG. 3.

Note that the threshold that can be set for the depth values in the method described in PTL 3 is a fixed value and is defined in order to remove a distant region such as a background and infinity. Accordingly, even when the method described in PTL 3 is applied, the range of the depth values is wide in comparison with the length of each of the object 11 and the object 12 in the depth direction, and thus, each width of colors that can be allocated to the objects is small similarly to the case in FIG. 3. Therefore, substantially similarly to the methods described in PTL 1 and PTL 2, it is difficult for the user to recognize solidity (feeling of depth) of each of the objects in the depth image 22.

<Depth value range setting>

Accordingly, a maximum value and a minimum value of depth values are set for depth data corresponding to image data to define a depth value range from the minimum value to the maximum value. For example, a mask corresponding to the depth value range thus defined is generated for the depth data.

In this manner, a depth value range can be set as desired, and therefore, processing can be performed for a desired depth value range of the depth data. For example, a mask corresponding to a set depth value range can be generated as described above. Moreover, by using this mask, a depth image corresponding to the depth value range can be formed, or 3D data corresponding to the depth value range can be generated, for example.

Note that, instead of generating a mask, hues may be set for the depth values according to the depth value range defined in the manner described above. This hue setting allows formation of a depth image for which hues have been set according to the defined depth value range, for example.

<Depth value range setting GUI>

For example, a display image which includes a GUI (Graphical User Interface) for setting a depth value range may be formed, an input that is associated with setting of a depth value range and that is made on the basis of the GUI included in the display image may be received, and then a range of the depth values may be set according to this input. In other words, a "desired depth value range" may be manually set.

FIG. 5 is a diagram depicting an example of a display image in which a GUI for setting a depth value range is displayed. A display image 30 depicted in FIG. 5 is an image displayed on a monitor to present a depth image to the user and receive an instruction input associated with depth data, for example. A depth value may be a value proportional to a distance or a value proportional to disparity in stereoscopy. In this case, each of these values can be converted into the other value by the following equation (1).

$$\text{Distance (m)} = (\text{Focal distance (m)} \times \text{Base line length (m)}) / \text{Disparity (m)} \quad ...(1)$$

As depicted in FIG. 5, the display image 30 includes a depth image display section 31 in which to display a depth image. The display image 30 further includes a slide bar 32 as a depth value range setting GUI to designate a range of depth values according to positions of operators. The operators are shiftable along the slide bar 32. The user can set a desired range of depth values by determining the positions of the operators. In other words, the user can change the "desired depth value range" by changing the positions of the operators. Accordingly, the "desired depth value range" is manually set.

As depicted in FIG. 5, a knob 33 and a knob 34 are provided on the slide bar 32 as the operators. The knob 33 is an operator which designates a minimum value of the "desired depth value range" according to its position. In addition, the knob 34 is an operator which designates a maximum value of the "desired depth value range" according to its position. That is, the user can designate an upper limit and a lower limit of the depth value range by determining the positions of the knob 33 and the knob 34. In other words, the knob 33 and the knob 34 are each an operator for designating the "desired depth value range." A range between the maximum value and the minimum value of depth values designated by the user using the knob 33 and the knob 34 is defined as the "desired depth value range."

Moreover, a minimum value display section 35 in which to display the minimum value of the "desired depth value range" currently designated is provided on the left side of the slide bar 32 of the display image 30 in the figure. That is, a depth value corresponding to the position of the knob 33 is displayed in the minimum value display section 35. For example, when the position of the knob 33 is updated, the depth value displayed in the minimum value display section 35 is updated accordingly.

Further, a maximum value display section 36 in which to display the maximum value of the "desired depth value range" currently designated is provided on the right side of the slide bar 32 of the display image 30 in the figure. That is, a depth value corresponding to the position of the knob 34 is displayed in the maximum value display section 36. For example, when the position of the knob 34 is updated, the depth value displayed in the maximum value display section 36 is updated accordingly.

Note that disparity may be displayed instead of the distance (the depth value) in each of the minimum value display section 35 and the maximum value display section 36. Moreover, a GUI (e.g., a button) may be provided to switch display between the distance and the disparity in each of the minimum value display section 35 and the maximum value display section 36. Note that the magnitude of values in the case of display of the disparity has an inverse relation with the magnitude of values in the case of display of the distance.

The positions and the values of the knob 33 and the knob 34 on the slide bar 32 may have a relation of an equal interval with respect to the distance.

Moreover, the positions and the values of the knob 33 and the knob 34 on the slide bar 32 may have a relation of an equal interval with respect to the disparity.

In the case of handling depth values generated on the basis of a principle of stereoscopy, the depth values are preferably defined at equal intervals with respect to disparity. In this case, offerable is such an advantage that a change of a region to be selected is kept substantially constant regardless of a shifted position of the knob on the bar.

Moreover, for example, a shift of the knob 33 to the right side beyond the knob 34 in the figure may be inhibited. For example, when the knob 33 is shifted to the right side beyond the position of the knob 34 (the position at the time of the start of the shift of the knob 33), the knob 34 may be shifted to the right according to the shift of the knob 33 so as to prevent a state where the knob 33 is located on the right side of the knob 34. In other words, the positions of the respective knobs may be controlled in such a manner that the knob 33 is always located on the left side of the knob 34.

Alternatively, the state where the knob 33 is located on the right side of the knob 34 may be permitted. In this case, the position of the knob 33 or the knob 34 located on the left side in the figure may indicate the minimum value of the "desired depth value range," and the position of the other knob located on the right side in the figure may indicate the maximum value of the "desired depth value range." For example, in a case where the knob 33 is located on the right side of the knob 34, the position of the knob 34 may indicate the minimum value of the "desired depth value range," while the position of the knob 33 may indicate the maximum value of the "desired depth value range."

While the slide bar 32 is described above as an example of the depth value range setting GUI, the depth value range setting GUI is not limited to this example and may be any types of GUI. Moreover, while the knob 33 is described above as an example of the operator for setting the minimum value of the depth value range, the operator for setting the minimum value is not limited to this example and may be any types of GUI. Furthermore, while the knob 34 is described above as an example of the operator for setting the maximum value of the depth value range, the operator for setting the maximum value is not limited to this example and may be any types of GUI.

<Hue setting>

Hues may also be set for depth data according to the "desired depth value range" set in the manner described above. For example, hues may be set for respective depth values according to the "desired depth value range" designated using the slide bar 32, and a depth image thus formed may be displayed on the depth image display section 31.

For example, as depicted in FIG. 6, the "desired depth value range" including the object 11 may be set, and hues may be set in such a manner as to allocate many colors to this range. In the case of the example in FIG. 6, a depth value range in which the object 11 exists is designated as the "desired depth value range." This range is divided into regions A1 to A5, and different colors are allocated to the respective regions. In addition, a range on the front side with respect to the "desired depth value range," i.e., a range of the depth values on the front side with respect to the object 11 is designated as one region A0, and one color (e.g., white) is allocated to the region A0. Similarly, a range on a far side with respect to the "desired depth value range," i.e., a range of the depth values on the far side with respect to the object 11 is designated as one region A6, and one color (e.g., black) is allocated to the region A6.

Note that, in the case of FIG. 6, the colors allocated to the respective regions are not limited to the colors in this example and may be any colors as in the case of FIG. 4. Moreover, patterns may be used instead of colors. Furthermore, a combination of colors and patterns may be used. However, hue setting (allocation of respective colors) is performed in conformity with predetermined regularity as in the case of FIG. 4.

FIG. 7 depicts an example of the display image 30. In the case of the example in FIG. 7, the positions of the knob 33 and the knob 34 on the slide bar 32 are operated by the user or the like to designate a "desired depth value range" having a minimum value "D1 (m)" and a maximum value "D2 (m)." In addition, a depth image 22 (a depth image corresponding to the RGB image 21) having hues set for respective depth values according to the "desired depth value range" thus designated is displayed in the depth image display section 31. The range from D1 to D2 corresponds to the range from the region A1 to the region A5 in the example of FIG. 6. That is, the object 11 exists in the range from D1 to D2. In addition, depth values from D1 to D2 can be expressed in five colors out of seven colors by allocating hues in the manner depicted in FIG. 6. Specifically, the width of the colors allocated to the object 11 (the maximum color difference) is larger than that in the case of FIG. 3 (two colors out of seven colors). Accordingly, the user can recognize more detailed solidity (feeling of depth) of the object 11.

Moreover, as depicted in FIG. 8, for example, a "desired depth value range" including the object 12 may be defined, and hues may be set in such a manner as to allocate many colors to the defined range. In the case of the example in FIG. 8, the depth value range in which the object 12 exists is designated as the "desired depth value range." This range is divided into regions A1 to A5, and different colors are allocated to the respective regions. In addition, a range on the front side with respect to the "desired depth value range," i.e., a range of the depth values on the front side with respect to the object 12 is designated as one region A0, and one color (e.g., white) is allocated to the region A0. Similarly, a range on the far side with respect to the "desired depth value range," i.e., a range of the depth values on the far side with respect to the object 12 is designated as one region A6, and one color (e.g., black) is allocated to the region A6.

Note that, in the case of FIG. 8, the colors allocated to the respective regions are not limited to the colors in this example and may be any colors as in the case of FIG. 4. Moreover, patterns may be used instead of colors. Furthermore, a combination of colors and patterns may be used. However, hue setting (allocation of respective colors) is performed in conformity with predetermined regularity as in the case of FIG. 4.

FIG. 9 depicts an example of the display image 30. In the case of the example in FIG. 9, the positions of the knob 33 and the knob 34 on the slide bar 32 are operated by the user or the like to designate a "desired depth value range" having a minimum value "D3 (m)" and a maximum value "D4 (m)." In addition, a depth image 22 (a depth image corresponding to the RGB image 21) having hues set for respective depth values according to the "desired depth value range" thus designated is displayed in the depth image display section 31. The range from D3 to D4 corresponds to the range from the region A1 to the region A5 in the example of FIG. 8. That is, the object 12 exists in the range from D3 to D4. In addition, depth values from D3 to D4 can be expressed in five colors out of seven colors by allocating hues in the manner depicted in FIG. 8. Specifically, the width of the colors allocated to the object 12 (the maximum color difference) is larger than that of the case of FIG. 3 (two colors out of seven colors). Accordingly, the user can recognize more detailed solidity (feeling of depth) of the object 12.

In other words, the user can recognize more detailed solidity (feeling of depth) of the "desired depth value range" by setting hues for depth data according to the "desired depth value range."

<Mask process>

While the colors (e.g., white and black) different from the colors within the "desired depth value range" are allocated to the region +A0 located on the front side with respect to the "desired depth value range" and the region A6 located on the far side with respect to the "desired depth value range" in the examples depicted in FIGS. 6 to 9, the manner of allocation of colors is not limited to this example. For example, the color allocated to the region A1, i.e., the color allocated to the minimum value of the "desired depth value range" may be allocated to the region A0 located on the front side with respect to the "desired depth value range." Moreover, for example, the color allocated to the region A5, i.e., the color allocated to the maximum value of the "desired depth value range" may be allocated to region A6 located on the far side with respect to the "desired depth value range."

Further, a mask may be generated for such hue setting according to the "desired depth value range." For example, in the depth image displayed in the depth image display section 31 in the example of FIG. 9, the object 11 located on the front side with respect to the object 12 is expressed in the color (e.g., white) allocated to the region A0, which color is different from the color of the background (e.g., black). In a case where attention is to be directed only to the object 12, this expression of the object 11 is unnecessary.

Accordingly, a region located outside the "desired depth value range" including the object 12 may be masked, and hues may be set only for the "desired depth value range." In this case, no color needs to be allocated, or a predetermined color may separately be allocated to the masked depth values outside the "desired depth value range." The predetermined color in this case may be any color. For distinction between the "desired depth value range" and the region outside the "desired depth value range," a color different from the colors allocated to the "desired depth value range" is only required to be allocated to the depth values outside the "desired depth value range."

Note that either the same color or different colors may be allocated to the depth values on the front side with respect to the "desired depth value range" and the depth values on the far side with respect to the "desired depth value range." For example, as described above, the color allocated to the region A1 may be allocated to the region +A0 located on the front side with respect to the "desired depth value range," while the color allocated to the region A5 may be allocated to the region A6 located on the far side with respect to the "desired depth value range."

A depth image displayed in the depth image display section 31 of the display image 30 in FIG. 10 is an example of the depth image 22 in a case where hues are set only for the "desired depth value range" with a mask formed on a region outside the "desired depth value range" in the manner described above. Note that the same color (e.g., black) is separately allocated to the depth values on the front side and the far side with respect to the "desired depth value range" in the depth image 22.

Specifically, in the case of this example in FIG. 10, the object 11 located on the front side with respect to the object 12 is also expressed in the color (e.g., black) same as the color of the background or the like. Consequently, only the object 12 is expressed in colors different from the color of the other regions. Accordingly, the user can pay attention to the object 12 more easily than the case of the example in FIG. 9.

While the example in which the depth data outside the "desired depth value range" is masked is described above, the range to be masked may be freely determined as long as the range is set on the basis of the "desired depth value range." For example, the region inside "the desired depth value range" may be masked. Alternatively, a region outside (or inside) a predetermined range containing "the desired depth value range" may be masked. Further alternatively, a region inside (or outside) a part of "the desired depth value range" may be masked.

In other words, this depth data mask process is also considered as a process for masking a pixel region that is other than an object but exists in the "desired depth value range" in the depth image. Accordingly, a region to be masked in the depth image may be set on the basis of the "desired depth value range." For example, a depth image may be formed with a mask formed in the set region, or mask data for masking the set region may be generated.

<Automatic setting of depth value range>

The positions of the knob 33 and the knob 34 (i.e., the "desired depth value range") may be automatically set rather than changed by the user. For example, the positions of the knob 33 and the knob 34 may be set according to distribution of depth values in a depth image to be displayed. For example, in a case where the depth values included in the depth image are in a range from 1.2 m to 1.5 m, the knob 33 may be set to a position corresponding to 1.2 m and the knob 34 may be set to a position corresponding to 1.5 m on the basis of the range of the depth values at the time of completion of an image reading operation. In this manner, hues can be allocated to the depth values included in the depth image without excess or insufficiency.

However, when the maximum value and the minimum value of the depth values in the depth image are simply applied, the following problem may arise. In a case where a pixel value considerably deviated from a true value due to a certain influence is designated as the maximum value or the minimum value, hues are allocated to values in a range wider than the original range. For example, in a case where one pixel which has a depth value corresponding to 99 m exists in the data having true values in a range from 1.2 m to 1.5 m due to an influence of noise or the like, hues are allocated to a range from 1.2 m to 99 m. In this case, it may be difficult to recognize depth distribution due to considerable deviation from the originally intended allocation that would have no excess or insufficiency. Accordingly, the maximum value and the minimum value may be acquired after an image processing filter having a noise removing effect, such as a two-dimensional median filter, is applied to the depth image, for example. The two-dimensional median filter is a filter which adopts, as an output value of a pixel of interest, a median of values of nine pixels including adjacent eight pixels, for example.

Needless to say, parameters used for automatically setting the "desired depth value range" in this manner are not limited to the parameters in the above distribution of the depth values and may be any parameters.

Moreover, the position of the knob 33 or the knob 34 automatically set as described above may be shifted by the user or the like. Specifically, the "desired depth value range" automatically set as described above may be updated (manually set) by a shift of the knob 33 or the knob 34 performed by the user or the like. In this case, it can also be said that the initial positions of the knob 33 and the knob 34, i.e., the initial values of the minimum value and the maximum value of the "desired depth value range" are set by the automatic setting described above.

Further, in the automatic setting described above, a range of depth values corresponding to the slide bar 32 (in other words, a scale of the slide bar 32) may be set instead of the positions of the knob 33 and the knob 34. Specifically, for example, the knob 33 may be fixed to the left end of the slide bar 32, the knob 34 may be fixed to the right end of the slide bar 32, and respective depth values corresponding to the left end and the right end of the slide bar 32 may be automatically set. For example, these depth values may be set according to the distribution of depth values in the depth image to be displayed as in the case described above. That is, scale adjustment of the slide bar 32 may be made according to the distribution of the depth values in the depth image.

For example, when the range of the slide bar 32 is defined in correspondence with the range from the nearest neighbor to infinity, adjustment of the positions of the knob 33 and the knob 34 may become difficult for a depth image having a narrow depth range. By contrast, when the range of the depth values corresponding to the slide bar 32 is narrower than the range of the depth values in the depth image, it may be difficult to express all of the depth values in the depth image. Such deterioration in operability of the slide bar 32 can be reduced by varying the scale of the slide bar 32 as described above. Moreover, the deterioration in operability of the slide bar 32 can be reduced more easily by automatically adjusting the scale of the slide bar 32 according to the depth distribution of the depth image.

Needless to say, in this case, too, parameters used for scale adjustment of the slide bar 32 are not limited to the parameters in the above distribution of the depth values and may be any parameters. Moreover, the scale of the slide bar 32 automatically set as described above may be varied by an operation performed by the user or the like.

Note that the scale adjustment of the slide bar 32 in the manner described above is also considered as control over a depth value shiftable range of the knob 33 and the knob 34 (the maximum range (the upper limit and the lower limit) of the "desired depth value range").

For controlling such a depth value variable range of the knob 33 and the knob 34, the shiftable range of the knob 33 and the knob 34 of the slide bar 32 may be controlled to achieve the automatic setting described above, instead of scale adjustment of the slide bar 32. For example, the following control may be performed. The positions of the knob 33 and the knob 34 are set by the automatic setting described above. Thereafter, a shift of the knob 33 to the left side beyond the position automatically set is prohibited while a shift of the knob 34 to the right side beyond the position automatically set is prohibited in a state where the positions of the knob 33 and the knob 34 are variable by a GUI operation performed by the user or the like.

<Display of histogram>

Note that a histogram of depth values may be displayed in the display image 30. Specifically, for example, a histogram 41 may be included in the display image 30 as depicted in FIG. 11. The histogram 41 indicates an appearance frequency of depth values in a depth image displayed in the depth image display section 31, in correspondence with the position on the slide bar 32. Specifically, the histogram 41 may be included in the GUI (the slide bar 32) included in the display image 30.

The user can estimate a position of an object (a position in the depth direction) on the basis of the histogram of depth values provided in the manner described above. For example, the user can set the "desired depth value range" more easily in such a manner as to contain the object by setting the positions of the knob 33 and the knob 34 in alignment with breaks of the depth values on the basis of the histogram. Moreover, noise components of the depth values can be estimated on the basis of the histogram. In other words, the user can set the "desired depth value range" more efficiently by utilizing the histogram displayed in the manner described above.

Note that, when the appearance frequency of the depth values is displayed in correspondence with the position on the slide bar 32 as in the example depicted in FIG. 11, the user can set the positions of the knob 33 and the knob 34 in correspondence with the histogram (the appearance frequency distribution) more easily.

<Merged display of depth image and RGB image>

Positions of depth data (image) and RGB data (image) are not necessarily aligned with each other. For example, in a case where depths and RGB are acquired using different sensors, alignment is performed on the basis of the depths. However, in the case of deviation of calibration of sensor positions, for example, RGB-D data having a deviated positional relation is obtained. Moreover, in the case of generation of depth data based on the principle of stereoscopy, the depth data may slightly protrude from the RGB data as a result of calculations generally carried out by matching between ranges each having a certain size even though original data corresponds to the RGB image itself. However, it is extremely difficult to visually recognize such deviation only by displaying the depth image and the RGB image arranged in a left-right direction or an up-down direction.

Accordingly, the depth image and the RGB image may be blended and displayed. For example, as depicted in FIG. 12, a blended image formed by blending the depth image 22 (FIG. 3) and the RGB image 21 (FIG. 2) may be displayed in the depth image display section 31 of the display image 30. The user can easily recognize positional deviation between the depth image and the RGB image with reference to display of such a blended image.

Note that the depth image and the RGB image may be blended for each pixel. In this case, respective pixels may be blended by calculations of the following equation (2) to equation (4), for example.

$$\text{Blended pixel R = Blend ratio} \times \text{Depth image (hue}$$

$$\text{expression) R + (1 - Blend ratio) * RGB image R ...(2)}$$

$$\text{Blended pixel G = Blend ratio} \times \text{Depth image (hue}$$

$$\text{expression) G + (1 - Blend ratio) * RGB image G ...(3)}$$

$$\text{Blended pixel B = Blend ratio} \times \text{Depth image (hue}$$

$$\text{expression) B + (1 - Blend ratio) * RGB image B ...(4)}$$

The user can visually recognize positional deviation between the depth image and the RGB image with high efficiency with reference to the depth image and the RGB image blended in this manner.

In this case, an optimum blend ratio of the depth image and the RGB image (a blend ratio offering highest visibility for the user) depends on data. Accordingly, the blend ratio may be a ratio controllable by the user. For example, the blend ratio may be controlled in the following manner. A display image including a GUI for setting the blend ratio of the depth image and the RGB image is formed. An input that is associated with setting of the blend ratio of the depth image and the RGB image and that is performed on the basis of the GUI included in the display image is received. The blend ratio of the depth image and the RGB image is set on the basis of the input, to thereby form a blended image.

For example, as a GUI for setting the blend ratio of the depth image and the RGB image, a slide bar 51 for designating the blend ratio according to the position of an operator is provided on the display image 30 as depicted in FIG. 12. A knob 52 is provided as the operator and is shiftable along the slide bar 51. The user can set the blend ratio of the depth image and the RGB image by operating the knob 52 and designating the position of the knob 52. This setting is then reflected in the blended image displayed in the depth image display section 31. Specifically, the blended image is formed by blending the depth image and the RGB image at the blend ratio corresponding to the position of the knob 52 designated by the user, and the blended image thus generated is displayed in the depth image display section 31. That is, the user can manually set the blend ratio of the depth image and the RGB image by operating the knob 52.

Note that a depth value blend ratio display section 53 in which to display a blend ratio (a numerical value) of the depth image is provided on the left side of the slide bar 51 in the figure. Moreover, an RGB blend ratio display section 54 in which to display a blend ratio (a numerical value) of the RGB image is provided on the right side of the slide bar 51 in the figure. The user can roughly recognize the blend ratio with reference to the position of the knob 52 but can recognize the blend ratio more directly with reference to the display in these sections (display of the numerical values). That is, the user can recognize the blend ratio more accurately on the basis of this display. Note that the blend ratio of the depth image and the blend ratio of the RGB image add up to 1. Accordingly, it is also possible that only either one of the blend ratios is displayed. Moreover, display of the blend ratio (the numerical value) may be omitted. Specifically, the depth value blend ratio display section 53 and the RGB blend ratio display section 54 may be omitted.

Further, the depth image subjected to the mask process may also be blended with the RGB image in the foregoing manner. Note that the blend ratio (i.e., the position of the knob 52) may be automatically set as in the case of the slide bar 32. In this case, parameters used for the automatic setting may be any parameters. In addition, the blend ratio may be manually set by the user or the like after the automatic setting of the blend ratio. That is, an initial value of the blend ratio may be automatically set. Needless to say, the manual setting may be prohibited. Moreover, in a case where the manual setting is allowed, a shiftable range may be limited on the basis of a result of the automatic setting. Furthermore, as in the case of the slide bar 32, a scale of the slide bar 51 may be made variable and automatically set.

<Erosion process>

In the case of generation of depth data based on the principle of stereoscopy, the depth data may slightly protrude from the RGB data as a result of calculations generally carried out by matching between ranges each having a certain size even though original data corresponds to the RGB image itself. For example, as depicted in FIG. 13, an object 61 in an RGB image may be converted into an object 62 in a depth image. If a range of generation of three-dimensional model data is determined on the basis of this depth range (the object 62), the background RGB may remain near a contour.

Accordingly, an erosion process as one type of morphology filters may be performed for a region designated on the basis of the depth range to define a result of the erosion process as a range of generation of three-dimensional model data (i.e., a mask region).

According to the erosion process, with respect to a pixel of interest, if all neighboring pixels are inside a region, the pixel of interest is output as a pixel inside the region, while not all neighboring pixels are inside the region, the pixel of interest is output as a pixel outside the region. That is, neighboring pixels as viewed from respective pixels on an outer circumference (an outside boundary) of the object 62 in the depth image are all output as a pixel outside the region. Neighboring pixels mean pixels located in a predetermined range as viewed from a pixel to be processed. Specifically, pixels located within a circle that has a predetermined radius and a center of which is located at the pixel to be processed are defined as the neighboring pixels. This radius is also referred to as a kernel size.

For example, in the case of FIG. 13, a region which is located inside a circle 63 that has a center located on each of pixels on the outer circumference (the outer boundary) of the object 62 and has a radius corresponding to the kernel size and which is located inside the object 62 is defined as a region to be eroded (also referred to as an erosion region). Accordingly, the object 62 is reduced by an amount of the erosion region as a result of the erosion process.

The amount of erosion is varied by changing the kernel size. An appropriate kernel size depends on situations, and therefore, the kernel size may be provided as a variable size. For example, a display image including a GUI for setting the kernel size may be generated, and an input that is associated with setting of the kernel size and is performed on the basis of the GUI may be received. The kernel size may be set according to this input to perform the erosion process.

For example, as depicted in FIG. 14, a slide bar 71 which designates the kernel size according to the position of an operator may be provided in the display image 30 as a GUI for kernel size setting. A knob 72 is provided as the operator and is shiftable along the slide bar 71. The user can (manually) set the kernel size by operating the knob 72 and designating the position of the knob 72. Thereafter, this setting is reflected in the erosion process. Specifically, the erosion process is performed with the kernel size corresponding to the position of the knob 72 designated by the user, and the depth image subjected to the erosion process is displayed on the depth image display section 31. In this manner, for example, the user can achieve the kernel size setting in such a manner that the background does not enter the vicinity of the contour while checking the depth image (the depth image subjected to the erosion process) displayed on the depth image display section 31. Accordingly, the kernel size can be more easily set to a desired size.

Note that a kernel size display section 73 in which to indicate a kernel size (a numerical value) currently set is provided on the right side of the slide bar 71 in the figure. The user can roughly recognize the kernel size with reference to the position of the knob 72, but can more directly recognize the kernel size with reference to this display (the display of the numerical value). That is, the kernel size can be recognized more accurately. Note that the kernel size may be expressed by a decimal. Moreover, display of the kernel size (the numerical value) may be omitted. In other words, the kernel size display section 73 may be omitted.

For example, this erosion process may be performed by a procedure represented by syntax 81 depicted in FIG. 15.

Note that the erosion process described herein may be performed not only for a depth image but also for mask data. Note that the kernel size (i.e., the position of the knob 72) may be automatically set as in the case of the slide bar 32. In this case, parameters used for the automatic setting may be any parameters. In addition, the kernel size may be manually set by the user or the like after being automatically set. That is, an initial value of the kernel size may be automatically set. Needless to say, this manual setting may be prohibited. Moreover, in a case where the manual setting is allowed, a shiftable range may be limited on the basis of a result of the automatic setting. Furthermore, as in the case of the slide bar 32, a scale of the slide bar 71 may be made variable and automatically set.

<Case not performing hue setting>

While hues are set for the depth values according to the set "desired depth value range" in the example described above, execution of this hue setting may be avoided. For example, the mask process (or the mask generation) may be performed according to the "desired depth value range" without setting hues.

For example, as described with reference to FIG. 10, the mask process according to the "desired depth value range" may be performed on a depth image, and a depth image corresponding to a partial range of depth values may be formed with hue setting kept in an initial state (e.g., kept at the setting in FIG. 4). In this case, the object 12 in the depth image depicted in FIG. 10 is expressed in two colors as presented in FIG. 3.

In this case, the erosion process described above may be performed for a part of the object 12, or need not be performed. Moreover, mask data may be generated according to the "desired depth value range," and depth data may be edited using the mask data to generate depth data corresponding to a partial range of depth values.

Further, for example, three-dimensional model data (also referred to as 3D data) may be generated using depth data (image) and RGB data (image) as disclosed in PTL 2. Depending on use applications of the three-dimensional model data, the three-dimensional model data is desired to be generated for the range corresponding to all the depth data in some cases, and is desired to be generated only for an extracted specific object in other cases.

PTL 3 discloses a method which defines a threshold and generates three-dimensional model data only for a range on the front side with respect to the threshold. However, interactive means is needed to determine the threshold for extracting a specific object. Moreover, in some cases, an unnecessary part exists on both of the front and far sides with respect to an object desired to be extracted.

Accordingly, the minimum value and the maximum value of the range to which hues are allocated may also be used to designate a range for which three-dimensional model data is to be generated. Specifically, mask data may be generated according to the "desired depth value range," and 3D data corresponding to a partial range of depth values may be generated using the mask data. In this manner, the user can determine the depth value range for which 3D data is to be generated in an interactive manner while viewing the display image.

<2. First embodiment>

<2-1. Depth data processing apparatus>

FIG. 16 is a diagram depicting an example of a main configuration of a depth data processing apparatus which is an information processing apparatus according to an embodiment to which the present technology is applied. A depth data processing apparatus 100 depicted in FIG. 16 is an apparatus which processes depth data. For example, as described above in <1. Depth value range setting and processing control based on depth value range>, the depth data processing apparatus 100 can set a maximum value and a minimum value of depth values of the depth data to thereby set a depth value range from the minimum value to the maximum value. That is, the depth data processing apparatus 100 can set the "desired depth value range."

Note that FIG. 16 depicts main parts of processing units, data flows, and the like, and FIG. 16 does not necessarily depict all processing units and data flows. Specifically, the depth data processing apparatus 100 may further include a processing unit not depicted as a block in FIG. 16, and there may be a process or a data flow not indicated by an arrow or the like in FIG. 16.

As depicted in FIG. 16, the depth data processing apparatus 100 includes a filter 101, an automatic depth value range setting unit 102, a user depth value range setting unit 103, a hue setting unit 104, a region setting unit 105, a GUI processing unit 106, an image formation unit 107, a depth data editing unit 108, a 3D data generation unit 109, a bus 150, an input unit 151, and an output unit 152.

<Filter>

The filter 101 performs filtering on depth data. For example, the filter 101 can acquire depth data input to the depth data processing apparatus 100. Moreover, the filter 101 can apply an image processing filter, such as a two-dimensional median filter, to the depth data to reduce noise components as described in <Automatic setting of depth value range>. The filter 101 can supply the automatic depth value range setting unit 102 with the filtered depth data. Note that this filtering may be omitted. In this case, the filter 101 may be omitted.

<Automatic depth value range setting unit>

The automatic depth value range setting unit 102 performs a process associated with setting of the "desired depth value range." For example, the automatic depth value range setting unit 102 can acquire depth data from the filter 101. Moreover, the automatic depth value range setting unit 102 can perform a process associated with automatic setting of the "desired depth value range" on the depth data as described in <Automatic setting of depth value range>. For example, the automatic depth value range setting unit 102 can detect all depth values included in the depth data and set the "desired depth value range" on the basis of a result of the detection.

For example, the automatic depth value range setting unit 102 can set initial values of the minimum value and the maximum value of the "desired depth value range" (initial positions of the knob 33 and the knob 34) by the foregoing automatic setting. Moreover, the automatic depth value range setting unit 102 can adjust the scale of the slide bar 32. Further, the automatic depth value range setting unit 102 can control a shiftable range of each of the knob 33 and the knob 34 on the slide bar 32.

Note that the automatic depth value range setting unit 102 in this case may perform the automatic setting described above after removing depth values estimated as noise components or the like, for example. Moreover, the automatic depth value range setting unit 102 may process depth data by any method, and perform the automatic setting described above on the basis of the processed depth data. Further, the automatic depth value range setting unit 102 may perform the automatic setting described above on the basis of any other parameters. In addition, the automatic depth value range setting unit 102 may set predetermined values determined beforehand regardless of depth values included in depth data.

Besides, the automatic depth value range setting unit 102 can supply the user depth value range setting unit 103 with information indicating the set "desired depth value range" together with the depth data to be processed. Note that the automatic setting of the "desired depth value range" by the automatic depth value range setting unit 102 may be omitted. In this case, the automatic depth value range setting unit 102 may be omitted, and an output from the filter 101 may be supplied to the user depth value range setting unit 103.

<User depth value range setting unit>

The user depth value range setting unit 103 performs a process associated with setting of the "desired depth value range." For example, the user depth value range setting unit 103 can acquire depth data supplied from the automatic depth value range setting unit 102, information indicating the "desired depth value range" associated with the depth data, and the like. Moreover, the user depth value range setting unit 103 can acquire an input that is associated with setting of the depth value range and is supplied from the GUI processing unit 106. Further, the user depth value range setting unit 103 can perform a process associated with manual setting of the "desired depth value range" on the basis of the respective items of the acquired information as described above in <Depth value range setting> and <Depth value range setting GUI>. For example, the user depth value range setting unit 103 can set the "desired depth value range" according to a user operation or the like performed on the GUI.

As depicted in FIG. 16, the user depth value range setting unit 103 includes a maximum value setting unit 121 and a minimum value setting unit 122.

The maximum value setting unit 121 can set a maximum value of depth values included in the "desired depth value range" (i.e., an upper limit of the "desired depth value range"). For example, when the user shifts the knob 34 to a predetermined position, a depth value corresponding to the position is supplied from the GUI processing unit 106 to the maximum value setting unit 121 as a user instruction. The maximum value setting unit 121 sets the depth value designated by the user instruction as the maximum value of the depth values included in the "desired depth value range."

The minimum value setting unit 122 can set a minimum value of depth values included in the "desired depth value range" (i.e., a lower limit of the "desired depth value range"). For example, when the user shifts the knob 33 to a predetermined position, a depth value corresponding to the position is supplied from the GUI processing unit 106 to the minimum value setting unit 122 as a user instruction. The minimum value setting unit 122 sets the depth value designated by the user instruction as the minimum value of the depth values included in the "desired depth value range."

The user depth value range setting unit 103 can supply the hue setting unit 104, the region setting unit 105, and others with information indicating the "desired depth value range" manually set in the manner described above. Note that the manual setting of the "desired depth value range" by the user depth value range setting unit 103 may be omitted. In this case, the user depth value range setting unit 103 may be omitted, and an output from the automatic depth value range setting unit 102 (e.g., information indicating the "desired depth value range" automatically set) may be supplied to the hue setting unit 104, the region setting unit 105, and others.

<Hue setting unit>

The hue setting unit 104 performs a process associated with hue setting. For example, the hue setting unit 104, for example, the hue setting unit 104 can acquire information indicating the "desired depth value range" supplied from the user depth value range setting unit 103 and other information. Moreover, the hue setting unit 104 can set hues for depth data according to the "desired depth value range" as described above in <Hue setting> on the basis of the acquired information. Furthermore, the hue setting unit 104 can supply the image formation unit 107, the bus 150, and others with the hue setting information.

Note that this hue setting may be omitted. In this case, the hue setting unit 104 may be omitted.

<Region setting unit>

The region setting unit 105 performs a process associated with a mask. For example, the region setting unit 105 can acquire information indicating the "desired depth value range" supplied from the user depth value range setting unit 103 and other information. Moreover, the region setting unit 105 can acquire an input that is associated with setting of a kernel size and is supplied from the GUI processing unit 106. Further, the region setting unit 105 can acquire depth data input to the depth data processing apparatus 100.

The region setting unit 105 can perform the various kinds of processes described above in the <Mask process>, the <Erosion process>, the <Case not performing hue setting>, and the like on the basis of these items of information. For example, the region setting unit 105 can generate mask data for masking depth data on the basis of the information indicating the "desired depth value range" and the depth data input to the depth data processing apparatus 100. Moreover, the region setting unit 105 can perform the erosion process on the mask data according to the input associated with setting of the kernel size. Details of the region setting unit 105 will be described below.

Furthermore, the region setting unit 105 can supply the image formation unit 107, the depth data editing unit 108, the 3D data generation unit 109, the bus 150, and others with the generated mask data.

Note that this process associated with the mask may be omitted. In this case, the region setting unit 105 may be omitted.

<GUI processing unit>

The GUI processing unit 106 performs a process associated with information input on the basis of the GUI. For example, the GUI processing unit 106 can acquire, via the input unit 151, information input by an operation performed by the user or the like on the GUI. For example, the GUI processing unit 106 can acquire an input that is associated with setting of a depth value range and is supplied from the input unit 151. Moreover, the GUI processing unit 106 can acquire an input that is associated with setting of the kernel size and is supplied from the input unit 151. Further, the GUI processing unit 106 can acquire an input associated with a blend ratio of a depth image and an RGB image.

In addition, the GUI processing unit 106 can supply the user depth value range setting unit 103, the region setting unit 105, the image formation unit 107, and others with the acquired information. For example, the GUI processing unit 106 can supply the user depth value range setting unit 103 with an input associated with setting of a depth value range. Moreover, the GUI processing unit 106 can supply the region setting unit 105 with an input associated with setting of the kernel size. Furthermore, the GUI processing unit 106 can supply the image formation unit 107 with an input associated with the blend ratio of the depth image and the RGB image.

Note that the various processes may be performed without using the GUI (without instructions from the user). In this case, the GUI processing unit 106 may be omitted.

<Image formation unit>

The image formation unit 107 performs a process associated with image formation. For example, the image formation unit 107 can acquire hue setting information supplied from the hue setting unit 104. Moreover, the image formation unit 107 can acquire mask data supplied from the region setting unit 105. Further, the image formation unit 107 can acquire depth data and RGB data (image data) input to the depth data processing apparatus 100. In addition, the image formation unit 107 can acquire an input that is associated with a blend ratio of a depth image and an RGB image and is supplied from the GUI processing unit 106.

Besides, the image formation unit 107 can form the various images described above in <1. Depth value range setting and processing control based on depth value range>, for example, on the basis of the respective items of information. For example, the image formation unit 107 can form a depth image corresponding to hues set by the hue setting unit 104, by using depth data and hue setting information.

Moreover, the image formation unit 107 can further form a blended image of a depth image and an RGB image of RGB data by using the RGB data. In this case, the image formation unit 107 can blend the depth image and the RGB image at the blend ratio of the depth image and the RGB image designated by an input associated with the blend ratio of the depth image and the RGB image, to thereby form a blended image.

Further, the image formation unit 107 can form a depth image corresponding to some of depth values corresponding to the "desired depth value range" (e.g., depth values within the "desired depth value range") by using depth data, hue setting information, and mask data. Note that hue setting in this case may be either setting in an initial state (e.g., FIG. 4) or setting provided (updated) by the hue setting unit 104 (e.g., FIGS. 6 and 8).

Moreover, the image formation unit 107 can further form a blended image of a depth image and an RGB image of RGB data by using the RGB data. In this case, the image formation unit 107 can blend the depth image and the RGB image at the blend ratio of the depth image and the RGB image designated by an input associated with the blend ratio of the depth image and the RGB image, to thereby form a blended image.

Further, the image formation unit 107 can form the display image 30 by using the depth image and the blended image formed in the manner described above. As described above, for example, the display image 30 can include GUIs such as the slide bar 32 to the maximum value display section 36, the histogram 41, the slide bar 51 to the RGB blend ratio display section 54, and the slide bar 71 to the kernel size display section 74.

The image formation unit 107 can supply the bus 150 with generated image data. For example, the image formation unit 107 can supply a display unit 161 (described below) with the formed display image 30 via the bus 150 and cause the display image 30 to be displayed on the display unit 161. Moreover, the image formation unit 107 can supply a storage unit 162 (described below) with the depth image and blended image thus formed via the bus 150 and cause the depth image and the blended image to be stored in a storage medium 163 (described below). Furthermore, the image formation unit 107 can supply a communication unit 164 (described below) with the depth image and blended image thus formed via the bus 150 and cause the depth image and the blended image to be transmitted to the outside of the depth data processing apparatus 100 (e.g., another apparatus).

Note that formation of the depth image, the blended image, the display image, and the like may be avoided. In this case, the image formation unit 107 may be omitted.

<Depth data editing unit>

The depth data editing unit 108 performs a process associated with editing of depth data. For example, the depth data editing unit 108 can acquire mask data supplied from the region setting unit 105. Moreover, the depth data editing unit 108 can acquire depth data input to the depth data processing apparatus 100.

For example, the depth data editing unit 108 can mask the depth data by using the mask data and generate depth data corresponding to some of depth values corresponding to the "desired depth value range" (e.g., depth values within the "desired depth value range"). That is, the depth data editing unit 108 edits the depth data by using the mask data without forming a depth image.

Moreover, the depth data editing unit 108 can supply the bus 150 with the depth data generated in the manner described above (the depth data corresponding to some of depth values corresponding to the "desired depth value range"). For example, the depth data editing unit 108 can supply the storage unit 162 (described below) with the depth data via the bus 150 and cause the supplied depth data to be stored in the storage medium 163 (described below). Furthermore, the image formation unit 107 can supply the communication unit 164 (described below) with the generated depth data via the bus 150 and cause the depth data to be transmitted to the outside of the depth data processing apparatus 100 (e.g., another apparatus).

Note that generation of the depth data corresponding to some of the depth values corresponding to the "desired depth value range" may be avoided. In this case, the depth data editing unit 108 may be omitted.

<3D data generation unit>

The 3D data generation unit 109 performs a process associated with generation of 3D data. For example, the 3D data generation unit 109 can acquire mask data supplied from the region setting unit 105. Moreover, the 3D data generation unit 109 can acquire depth data and RGB data input to the depth data processing apparatus 100.

Further, the 3D data generation unit 109 can generate 3D data corresponding to some of depth values corresponding to the "desired depth value range" by using these items of information as described above in <Case not performing hue setting>. Note that the 3D data generation unit 109 may generate, using depth data and RGB data input to the depth data processing apparatus 100, 3D data associated with all depth values included in the depth data.

In addition, the 3D data generation unit 109 can supply the storage unit 162 (described below) with the generated 3D data via the bus 150 and cause the 3D data to be stored in the storage medium 163 (described below). Furthermore, the 3D data generation unit 109 can supply the communication unit 164 (described below) with the generated 3D data via the bus 150 and cause the 3D data to be transmitted to the outside of the depth data processing apparatus 100 (e.g., another apparatus).

Note that generation of the 3D data may be avoided. In this case, the 3D data generation unit 109 may be omitted.

<Input unit>

For example, the input unit 151 includes any input device such as a keyboard, a mouse, a microphone, a touch panel, or an input terminal and can receive information input by an operation performed by the user or the like, information supplied from other apparatuses, and the like via the input device. The input unit 151 can supply the GUI processing unit 106, for example, with the received information via the bus 150.

<Output unit>

The output unit 152 performs a process associated with outputting. For example, the output unit 152 includes the display unit 161, the storage unit 162, the storage medium 163, and the communication unit 164 as depicted in FIG. 16.

For example, the display unit 161 has a monitor that includes a liquid crystal panel, an organic EL (Electro Luminescence) panel, or the like and that is capable of displaying images, and controls display of the monitor. For example, the display unit 161 can cause various types of images supplied thereto via the bus 150 to be displayed on the monitor. For example, the display unit 161 can acquire image data of the display image 30 supplied from the image formation unit 107 and cause the display image 30 to be displayed on the monitor. Note that the display image 30 can include a depth image or a blended image as described above. Accordingly, the display unit 161 can cause the depth image or the blended image to be displayed on the monitor.

For example, the storage unit 162 controls storage of the storage medium 163 including a semiconductor memory or the like. The storage medium 163 may be either a removable storage medium or a built-in storage medium of the depth data processing apparatus 100. For example, the storage unit 162 can cause various types of information supplied thereto via the bus 150 to be stored in the storage medium 163. Moreover, the storage unit 162 can read data stored in the storage medium 163 and supply other processing units (e.g., the display unit 161 and the communication unit 164) with the data via the bus 150.

The communication unit 164 establishes communicate with a server on the Internet, other apparatuses connected by a wire or wireless LAN, other external devices, and the like by any communication methods. For example, the communication unit 164 can transmit various types of information supplied thereto via the bus 150 to a communication partner (an external device) through such communication. For example, the communication unit 164 can transmit such data by a streaming method or an upload method. Moreover, the communication unit 164 can receive various types of information transmitted from the communication partner (the external device) through the communication and supply other processing units with the information via the bus 150.

The depth data processing apparatus 100 having such a configuration can perform the processes described above in <1. Depth value range setting and processing control based on depth value range> and the like, for example, and obtain the advantageous effects described above.

Note that each of these processing units of the depth data processing apparatus 100 (the filter 101 to the 3D data generation unit 109, the input unit 151, and the output unit 152 (the display unit 161 to the communication unit 164)) may have any configuration. For example, each of the processing units may include a logical circuit for achieving the processes described above. Moreover, each of the processing units may have a CPU (Central Processing Unit), a ROM (Read Only Memory), a RAM (Random Access Memory), and the like, for example, and achieve the processes described above by executing a program with use of these components. Needless to say, each of the processing units may have both the logical circuit and the components described above and achieve some of the processes described above by using the logical circuit and the rest by executing the program. The configurations of the respective processing units may be provided independently of each other. For example, some of the processing units may achieve some of the processes described above by using the logical circuit, some other of the processing units may achieve the processes described above by executing the program, and the rest of the processing units may achieve the processes described above by both the logical circuit and execution of the program.

<Region setting unit>

FIG. 17 is a block diagram depicting an example of a main configuration of the region setting unit 105 in FIG. 16. Note that FIG. 17 depicts main parts of processing units, data flows, and the like, and FIG. 17 does not necessarily depict all processing units and data flows. Specifically, the region setting unit 105 may include a processing unit not depicted as a block in FIG. 17, and there may be a process or a data flow not indicated by an arrow or the like in FIG. 17.

For example, the region setting unit 105 includes a filter unit 201, a region extraction unit 202, and an erosion processing unit 203 as depicted in FIG. 17.

<Filter unit>

The filter unit 201 performs filtering. For example, the filter unit 201 can acquire depth data input to the depth data processing apparatus 100. Moreover, the filter unit 201 can acquire a user instruction supplied from the GUI processing unit 106. Further, the filter unit 201 performs filtering for reducing noise components on the depth data on the basis of the user instruction. In addition, the filter unit 201 supplies the region extraction unit 202 with the filtered depth data.

The region extraction unit 202 performs a process associated with a mask. For example, the region extraction unit 202 can acquire depth data supplied from the filter unit 201. Moreover, the region extraction unit 202 can acquire information indicating the "desired depth value range" supplied from the user depth value range setting unit 103 (e.g., information indicating a maximum value and a minimum value of depth values included in the "desired depth value range"). Further, the region extraction unit 202 generates mask data for extracting some depth values of depth data (mask data corresponding to the "desired depth value range") on the basis of the acquired information. In addition, the region extraction unit 202 can supply the erosion processing unit 203 with the mask data.

The erosion processing unit 203 performs a process associated with an erosion process. For example, the erosion processing unit 203 can acquire mask data corresponding to the "desired depth value range" supplied from the region extraction unit 202. Moreover, the erosion processing unit 203 can acquire an input (a user instruction) that is associated with setting of a kernel size and is supplied from the GUI processing unit 106. Further, the erosion processing unit 203 performs an erosion process using the designated kernel size on the mask data. In addition, the erosion processing unit 203 may supply the image formation unit 107, the depth data editing unit 108, the 3D data generation unit 109, the bus 150, and others with the mask data subjected to the erosion process.

The region setting unit 105 having such a configuration can perform the processes described above in <1.

Depth value range setting and processing control based on depth value range> and the like, for example, and obtain the advantageous effects described above.

Note that each of the processing units of the region setting unit 105 (the filter unit 201 to the erosion processing unit 203) may have any configuration. For example, each of the processing units may include a logical circuit for achieving the processes described above. Moreover, each of the processing units may have a CPU, a ROM, a RAM, and the like, for example, and achieve the processes described above by executing a program with use of these components. Needless to say, each of the processing units may have both the logical circuit and the components described above and achieve some of the processes described above by using the logical circuit and the rest by executing the program. The configurations of the respective processing units may be provided independently of each other. For example, some of the processing units may achieve some of the processes described above by using the logical circuit, some other of the processing units may achieve the processes described above by executing the program, and the rest of the processing units may achieve the processes described above by both the logical circuit and execution of the program.

<Flow of depth data process>

Described next with reference to a flowchart in FIG. 18 will be an example of a flow of a depth data process executed by the depth data processing apparatus 100 at the time of processing depth data.

In response to a start of the depth data process, the filter 101 performs filtering on depth data in step S101. Note that the processing in step S101 may be omitted.

In step S102, the automatic depth value range setting unit 102 automatically sets the "desired depth value range" for the depth data. Note that the processing in step S102 may be omitted.

In step S103, the GUI processing unit 106 receives an input corresponding to a user operation via the input unit 151.

In step S104, the user depth value range setting unit 103 manually sets the "desired depth value range" on the basis of the input received in step S103. For example, the user depth value range setting unit 103 manually sets both or either one of a maximum value and a minimum value of the "desired depth value range."

In step S105, the hue setting unit 104 sets hues for the depth data according to the "desired depth value range" set in step S104. Note that the processing in step S105 may be omitted.

In step S106, the region setting unit 105 executes the region setting process and generates mask data for masking the depth data according to the "desired depth value range" set in step S104. Note that the processing in step S106 may be omitted.

In step S107, the image formation unit 107 forms a display image corresponding to the "desired depth value range" by using the information indicating hue setting provided in step S105, the mask data generated in step S106, and the like. Note that the processing in step S107 may be omitted.

In step S108, the depth data editing unit 108 generates depth data (also referred to as partial depth data) corresponding to some of depth values corresponding to the "desired depth value range," by using the mask data generated in step S106 and the like. Note that the processing in step S108 may be omitted.

In step S109, the 3D data generation unit 109 generates 3D data corresponding to some of depth values corresponding to the "desired depth value range" by using the mask data generated in step S106 and the like. Note that the processing in step S109 may be omitted.

In step S110, the display unit 161 causes the display image formed in step S107 to be displayed on the monitor. Note that the processing in step S110 may be omitted.

In step S111, the storage unit 162 causes various types of data generated in the respective processing operations from step S105 to step S109 to be stored in the storage medium 163. Note that the processing in step S111 may be omitted.

In step S112, the communication unit 164 causes various types of data generated in the respective processing operations from step S105 to step S109 to be transmitted to a communication partner (another device). Note that the processing in step S112 may be omitted.

The depth data process is completed by performing the respective processing operations in the manner described above. The depth data processing apparatus 100 can perform a process for the desired depth value range of the depth data by executing the respective processing operations in the manner described above.

<Flow of region setting process>

Described next with reference to a flowchart in FIG. 19 will be an example of a flow of the region setting process performed in step S106 in FIG. 18.

In response to a start of the region setting process, the filter unit 201 of the region setting unit 105 performs filtering on depth data in step S131.

In step S132, the region extraction unit 202 extracts a region included in a designated range from a minimum value to a maximum value of depth values from the filtered depth data to generate mask data.

In step S133, the erosion processing unit 203 performs the erosion process on the mask data generated in step S132, by using a designated kernel size.

After completion of the erosion process, the region setting process ends, and the process returns to FIG. 18.

The region setting unit 105 can generate partial depth data corresponding to some of depth values corresponding to the "desired depth value range" by executing the respective processing operations in the manner described above. In this manner, the depth data processing apparatus 100 can perform a process for the desired depth value range of the depth data.

<2-2. Region setting unit>

FIG. 20 is a block diagram depicting another example of the configuration of the region setting unit 105 in FIG. 16. Note that FIG. 20 depicts main parts of processing units, data flows, and the like, and FIG. 20 does not necessarily depict all processing units and data flows. Specifically, the region setting unit 105 may include a processing unit not depicted as a block in FIG. 20, and there may be a process or a data flow not indicated by an arrow or the like in FIG. 20.

In this case, the region setting unit 105 includes a filter unit 211, a region extraction unit 212, and a guided filter 213 as depicted in FIG. 20. The filter unit 211 is a processing unit similar to the filter unit 201 and performs a process similar to the process of the filter unit 201. Moreover, the region extraction unit 212 is a processing unit similar to the region extraction unit 202 and performs a process similar to the process of the region extraction unit 202.

<Guided filter>

Specifically, in the case of the example of FIG. 20, the region setting unit 105 includes the guided filter 213 instead of the erosion processing unit 203 in the example of FIG. 17.

For example, the guided filter 213 can acquire mask data from the region extraction unit 212. Moreover, the guided filter 213 can acquire a user instruction supplied from the GUI processing unit 106. Further, the guided filter 213 can acquire RGB data. In addition, the guided filter 213 can perform filtering using the RGB data, such as Weighted median, as a guide on the basis of the user instruction. The guided filter 213 performs this filtering to align a position of an edge of mask data with a position of an edge of the RGB data.

The guided filter 213 can supply the image formation unit 107, the depth data editing unit 108, the 3D data generation unit 109, the bus 150, and the like with the filtered mask data (i.e., the mask data having the edge position aligned with that of the RGB data).

The region setting unit 105 having such a configuration can perform the processes described above in <1. Depth value range setting and processing control based on depth value range> and the like, for example, and obtain the advantageous effects described above.

Note that each of the processing units of the region setting unit 105 (the filter unit 211 to the guided filter 213) can have any configuration. For example, each of the processing units may include a logical circuit for achieving the processes described above. Moreover, each of the processing units may have a CPU, a ROM, a RAM, and the like, for example, and achieve the processes described above by executing a program with use of these components. Needless to say, each of the processing units may have both the logical circuit and the components described above and achieve some of the processes described above by using the logical circuit and the rest by executing the program. The configurations of the respective processing units may be provided independently of each other. For example, some of the processing units may achieve some of the processes described above by using the logical circuit, some other of the processing units may achieve the processes described above by executing the program, and the rest of the processing units may achieve the processes described above by both the logical circuit and execution of the program.

<Flow of region setting process>

Described with reference to a flowchart in FIG. 21 will be an example of a flow of the region setting process performed in step S106 in FIG. 18 in this case.

In response to a start of the region setting process, processing in step S151 and processing in step S152 are executed in a manner similar to the processing in step S131 and the processing in step S132 (FIG. 19), respectively.

In step S153, the guided filter 213 performs filtering using RGB data as a guide to align a position of an edge of mask data with a position of an edge of the RGB data.

After completion of the processing in step S153, the region setting process ends, and the process returns to FIG. 18.

The region setting unit 105 can generate partial depth data corresponding to some of depth values corresponding to the "desired depth value range" by executing the respective processing operations in the manner described above.

In this manner, the depth data processing apparatus 100 can perform a process for the desired depth value range of the depth data.

<2-3. Region setting unit>

Note that the filtering guided by the RGB data in the manner described above may be performed on depth data. FIG. 22 is a block diagram depicting an example of a main configuration of the region setting unit 105 in this case. Note that FIG. 22 depicts main parts of processing units, data flows, and the like, and FIG. 22 does not necessarily depict all processing units and data flows. Specifically, the region setting unit 105 may include a processing unit not depicted as a block in FIG. 22, and there may be a process or a data flow not indicated by an arrow or the like in FIG. 22.

In this case, the region setting unit 105 includes a guided filter 221 and a region extraction unit 222 as depicted in FIG. 22.

<Guided filter>

The guided filter 221 is a processing unit similar to the guided filter 213 in FIG. 20 and performs a similar process. However, the guided filter 221 performs filtering on depth data input to the depth data processing apparatus 100. Specifically, the guided filter 221 performs filtering on the depth data by using RGB data as a guide to align a position of an edge of mask data with a position of an edge of the RGB data.

The guided filter 213 can supply the region extraction unit 222 with the filtered depth data (i.e., the depth data having the edge position aligned with that of the RGB data).

<Region extraction unit>

The region extraction unit 222 is a processing unit similar to the region extraction unit 212 in FIG. 20 and performs a similar process. However, the region extraction unit 222 performs the process on the filtered depth data supplied from the guided filter 221 (i.e., the depth data having the edge position aligned with that of the RGB data). That is, the region extraction unit 222 can acquire the depth data supplied from the guided filter 221. Moreover, the region extraction unit 222 can acquire information indicating the "desired depth value range" supplied from the user depth value range setting unit 103 (a maximum value and a minimum value of depth values included in the "desired depth value range"). Further, the region extraction unit 222 generates mask data for extracting some of depth values of the depth data (mask data corresponding to the "desired depth value range") on the basis of the maximum value and the minimum value of the depth values. In addition, the region extraction unit 202 can supply the image formation unit 107, the depth data editing unit 108, the 3D data generation unit 109, the bus 150, and the like with the mask data.

The region setting unit 105 having such a configuration can perform the processes described above in <1. Depth value range setting and processing control based on depth value range> and the like, for example, and obtain the advantageous effects described above.

Note that each of these processing units of the region setting unit 105 (the guided filter 221 and the region extraction unit 222) can have any configuration. For example, each of the processing units may include a logical circuit for achieving the processes described above. Moreover, each of the processing units may have a CPU, a ROM, a RAM, and the like, for example, and achieve the processes described above by executing a program with use of these components. Needless to say, each of the processing units may have both the logical circuit and the components described above and achieve some of the processes described above by using the logical circuit and the rest by executing the program. The configurations of the respective processing units may be provided independently of each other. For example, some of the processing units may achieve some of the processes described above by using the logical circuit, some other of the processing units may achieve the processes described above by executing the program, and the rest of the processing units may achieve the processes described above by both the logical circuit and execution of the program.

<Flow of region setting process>

Described with reference to a flowchart in FIG. 23 will be an example of a flow of the region setting process performed in step S106 in FIG. 18 in this case.

In response to a start of the region setting process, in step S171, the guided filter 221 performs filtering using RGB data as a guide to align a position of an edge of depth data with a position of an edge of the RGB data.

In step S172, the region extraction unit 222 extracts a region included in a designated range from a minimum value to a maximum value of depth values from the filtered depth data to generate mask data.

After completion of the processing in step S172, the region setting process ends, and the process returns to FIG. 18.

The region setting unit 105 can generate partial depth data corresponding to some of depth values corresponding to the "desired depth value range" by executing the respective processing operations in the manner described above. In this manner, the depth data processing apparatus 100 can perform a process for the desired depth value range of the depth data.

<2-4. Region setting unit>

Note that a region not masked may be integrated with an object region which is a region including a predetermined object in RGB data, instead of performing the erosion process. That is, mask data may be generated in such a manner that only the object region is extracted from the region not masked.

FIG. 24 is a block diagram depicting an example of a main configuration of the region setting unit 105 in this case. Note that FIG. 24 depicts main parts of processing units, data flows, and the like, and FIG. 24 does not necessarily depict all processing units and data flows. Specifically, the region setting unit 105 may include a processing unit not depicted as a block in FIG. 24, and there may be a process or a data flow not indicated by an arrow or the like in FIG. 24.

In this case, the region setting unit 105 includes a filter unit 231, a region extraction unit 232, an object region extraction unit 233, and a region integration unit 234 as depicted in FIG. 24. The filter unit 231 is a processing unit similar to the filter unit 201 (FIG. 17) and performs a similar process. Moreover, the region extraction unit 232 is a processing unit similar to the region extraction unit 202 (FIG. 17) and performs a similar process.

That is, in the case of the example of FIG. 24, the region setting unit 105 includes the object region extraction unit 233 and the region integration unit 234 instead of the erosion processing unit 203 in the example of FIG. 17.

<Object region extraction unit>

The object region extraction unit 233 performs a process associated with extraction of an object region. For example, the object region extraction unit 233 can acquire RGB data input to the depth data processing apparatus 100. Moreover, the object region extraction unit 233 can extract an object region including an object from the RGB data. Furthermore, the object region extraction unit 233 can supply the region integration unit 234 with information indicating the extracted object region (e.g., RGB data of the object region).

<Region integration unit>

In addition, the region extraction unit 232 can supply the region integration unit 234 with generated mask data. The region integration unit 234 performs a process associated with integration of a region not masked and an object region. For example, the region integration unit 234 can acquire mask data supplied from the region extraction unit 232. Moreover, the region integration unit 234 can acquire information indicating an object region supplied from the object region extraction unit 233.

Further, the region integration unit 234 can generate a mask corrected in correspondence with the object region within the "desired depth value range," by integrating the object region and the region not masked and indicated by the acquired mask data. Specifically, for example, the region integration unit 234 can generate (update) mask data in such a manner that only the object region included in the region not masked and indicated by the mask data is extracted. In addition, the region integration unit 234 can supply the image formation unit 107, the depth data editing unit 108, the 3D data generation unit 109, the bus 150, and the like with the generated mask data.

The region setting unit 105 having such a configuration can perform the processes described above in <1. Depth value range setting and processing control based on depth value range> and the like, for example, and obtain the advantageous effects described above.

Note that each of these processing units of the region setting unit 105 (the filter unit 231 to the region integration unit 234) may have any configuration. For example, each of the processing units may include a logical circuit for achieving the processes described above. Moreover, each of the processing units may have a CPU, a ROM, a RAM, and the like, for example, and achieve the processes described above by executing a program with use of these components. Needless to say, each of the processing units may have both the logical circuit and the components described above and achieve some of the processes described above by using the logical circuit, and the rest by executing the program. The configurations of the respective processing units may be provided independently of each other. For example, some of the processing units may achieve some of the processes described above by using the logical circuit, some other of the processing units may achieve the processes described above by executing the program, and the rest of the processing units may achieve the processes described above by both the logical circuit and execution of the program.

<Flow of region setting process>

Described with reference to a flowchart in FIG. 25 will be an example of a flow of the region setting process performed in step S106 in FIG. 18 in this case.

In response to a start of the region setting process, processing in step S191 and processing in step S192 are executed in a manner similar to the processing in step S131 and the processing in step S132 (FIG. 19), respectively.

In step S193, the object region extraction unit 233 extracts a predetermined object region from the RGB data.

In step S194, the region integration unit 234 integrates the region not masked by the mask data generated in step S192 with the object region set in step S193. For example, the region integration unit 234 extracts an object region included in a range from a minimum value to a maximum value of the depth from the mask data generated in step S192.

After completion of the processing in step S194, the region setting process ends, and the process returns to FIG. 18.

The region setting unit 105 can generate partial depth data corresponding to some of depth values corresponding to the "desired depth value range" by executing the respective processing operations in the manner described above. In this manner, the depth data processing apparatus 100 can perform a process for the desired depth value range of the depth data.

<3. Supplementary notes>

<Computer>

The series of processes described above can be executed by either hardware or software. In a case where the series of processes are executed by software, a program included in the software is installed in a computer. Examples of the computer herein include a computer incorporated in dedicated hardware, and a computer such as a general-purpose computer capable of executing various types of functions under various types of programs installed in the computer.

FIG. 26 is a block diagram depicting a configuration example of hardware of the computer which executes the series of processes described above under a program.

In a computer 900 depicted in FIG. 26, a CPU (Central Processing Unit) 901, a ROM (Read Only Memory) 902, and a RAM (Random Access Memory) 903 are connected to each other via a bus 904.

An input/output interface 910 is also connected to the bus 904. An input unit 911, an output unit 912, a storage unit 913, a communication unit 914, and a drive 915 are connected to the input/output interface 910.

For example, the input unit 911 includes a keyboard, a mouse, a microphone, a touch panel, an input terminal, or the like. For example, the output unit 912 includes a display, a speaker, an output terminal, or the like. For example, the storage unit 913 includes a hard disk, a RAM disk, a non-volatile memory, or the like. For example, the communication unit 914 includes a network interface. The drive 915 drives a removable recording medium 921 such as a magnetic disk, an optical disk, a magneto-optical disk, and a semiconductor memory.

According to the computer configured as above, for example, the CPU 901 loads a program stored in the storage unit 913 to the RAM 903 via the input/output interface 910 and the bus 904 and executes the loaded program to perform the series of processes described above. Data and the like required by the CPU 901 to perform various processes are also stored in the RAM 903 as necessary.

The program executed by the computer can be recorded in the removable recording medium 921 as a package medium or the like, and applied in this form, for example. In this case, the removable recording medium 921 is attached to the drive 915, and the program is installed to the storage unit 913 via the input/output interface 910.

Moreover, the program can be provided via a wired or wireless transfer medium such as a local area network, the Internet, and digital satellite broadcasting. In this case, the program can be received by the communication unit 914 and installed in the storage unit 913.

Alternatively, the program can be installed in the ROM 902 or the storage unit 913 beforehand.

<Applicable targets of present technology>

The present technology is applicable to any configuration. For example, the present technology can also be practiced as a partial configuration of an apparatus, such as a processor as a system LSI (Large Scale Integration) or the like, a module using multiple processors or the like, a unit using multiple modules or the like, or a set including units to which other functions are added.

Moreover, for example, the present technology is also applicable to a network system including multiple apparatuses. For example, the present technology may be practiced as cloud computing where processes are shared by multiple apparatuses and performed in a cooperative manner via a network. For example, the present technology may be practiced in a cloud service which provides services for any terminal such as a computer, a portable information processing terminal, and an IoT (Internet of Things) device.

Note that the system in the present specification refers to a set of multiple constituent elements (e.g., apparatuses, modules (parts)). All constituent elements of the system are not necessarily contained in the same housing. Accordingly, the system includes both a type including multiple apparatuses contained in separate housings and connected via a network, and a type including one apparatus which includes multiple modules contained in one housing.

<Field and use application to which present technology is applicable>

A system, an apparatus, a processing unit, or the like to which the present technology is applied is available in any field, such as traffics, medical treatments, crime prevention, agriculture, stock breeding, mining, beauty, plants, home appliances, meteorology, and nature monitoring. In addition, use applications of the present technology may also be determined freely.

<Others>

An embodiment of the present technology is not limited to the embodiment described above and may be modified in various manners without departing from the subject matters of the present technology.

For example, a configuration described above as one apparatus (or processing unit) may be divided into multiple apparatuses (or processing units). Conversely, the configurations described above as multiple apparatuses (or processing units) may collectively be constituted as one apparatus (or processing unit). Moreover, needless to say, a configuration other than the configurations described above may be added to the configurations of the respective apparatuses (or processing units). Further, as long as the configurations and the operations are substantially the same in the entire system, a part of the configuration of one apparatus (or processing unit) may be incorporated into the configuration of another apparatus (or processing unit).

In addition, for example, the program described above may be executed by any apparatus. In this regard, the apparatus is only required to have necessary functions (e.g., functional blocks) and acquire necessary information.

Further, for example, respective steps included in one flowchart may be executed by one apparatus or may be shared by multiple apparatuses to be executed. In addition, in a case where multiple processing operations are included in one step, the multiple processing operations may be executed by one apparatus or may be shared by multiple apparatuses to be executed. In other words, the multiple processing operations included in one step can also be executed as processing operations in multiple steps. Conversely, a process described above as multiple steps can also be executed collectively as one step.

Moreover, for example, as for the program executed by the computer, processing operations in steps describing the program may be executed in time series in the order described in the present specification, or may be executed in parallel or individually at necessary timings such as an occasion of a call. In other words, the processing operations in the respective steps may be executed in an order different from the order described above as long as no inconsistency arises. Further, the processing operations in the steps describing the program may be executed in parallel with processing operations of another program, or may be executed in combination with processing operations of another program.

In addition, for example, multiple technologies associated with the present technology can be practiced independently of each other and individually as long as no inconsistency arises. Needless to say, any multiple technologies associated with the present technology can be practiced in combination with each other. For example, a part or all of the present technology described in any embodiment can be practiced in combination with a part or all of the present technology described in another embodiment. In addition, any part or all of the present technology described above can be practiced in combination with another technology not described above.

Note that the present technology can also adopt the following configurations.

(1) An information processing apparatus including:

a depth value range setting unit that sets a maximum value and a minimum value of depth values of depth data corresponding to image data, to thereby set a depth value range from the minimum value to the maximum value; and
a mask generation unit that generates a mask for the depth data according to the depth value range set by the depth value range setting unit.

(2) The information processing apparatus according to (1), further including:

a display image formation unit that forms a display image including a GUI (Graphical User Interface) for setting the depth value range,

in which the depth value range setting unit sets the depth value range on the basis of an input that is made through the GUI included in the display image and that is received by a reception unit configured to receive inputs associated with setting of the depth value range.

(3) The information processing apparatus according to (2), in which the GUI includes a slide bar for designating the depth value range according to a position of an operator.

(4) The information processing apparatus according to (3), in which the slide bar has an operator whose position designates the maximum value and another operator whose position designates the minimum value.

(5) The information processing apparatus according to (3) or (4), in which the operator on the slide bar is positioned at equal intervals with respect to distance.

(6) The information processing apparatus according to (3) or (4), in which the operator on the slide bar is positioned at equal intervals with respect to disparity.

(7) The information processing apparatus according to any one of (3) to (6), in which the GUI further includes a histogram of the depth values.

(8) The information processing apparatus according to any one of (1) to (7), further including:

a filter unit that performs filtering on the depth data,

in which the depth value range setting unit sets the depth value range for the depth data on which the filtering has been performed by the filter unit.

(9) The information processing apparatus according to any one of (1) to (8), in which the depth value range setting unit automatically sets the depth value range.

(10) The information processing apparatus according to any one of (1) to (9), further including:
an erosion processing unit that performs an erosion process for the mask generated by the mask generation unit.

(11) The information processing apparatus according to (10), further including:

a display image formation unit that forms a display image including a GUI (Graphical User Interface) for the erosion process,

in which the erosion processing unit performs the erosion process on the basis of an input that is made through the GUI and that is received by a reception unit configured to receive inputs associated with setting of the erosion process.

(12) The information processing apparatus according to any one of (1) to (11), further including:
a filter unit that performs filtering for aligning an edge of the mask generated by the mask generation unit with that of the image data.

(13) The information processing apparatus according to any one of (1) to (12), further including:

a filter unit that performs filtering for aligning an edge of the depth data with that of the image data,

in which the mask generation unit generates the mask for the depth data subjected to the filtering by the filter unit, according to the depth value range set by the depth value range setting unit.

(14) The information processing apparatus according to any one of (1) to (13), further including:

an object region extraction unit that extracts an object region including a predetermined object from the image data; and

a region integration unit that generates a mask corrected in correspondence with the object region within the depth value range, by integrating the mask generated by the mask generation unit with the object region extracted by the object region extraction unit.

(15) The information processing apparatus according to any one of (1) to (14), further including:
a display image formation unit that forms a display image including an image indicative of the depth data within the depth value range, by performing a mask process on the depth data by using the mask generated by the mask generation unit.

(16) The information processing apparatus according to (15), in which the display image formation unit forms a display image including a blended image that is formed by blending the image indicative of the depth data within the depth value range with an image corresponding to the image data.

(17) The information processing apparatus according to (16),

in which the display image formation unit forms a display image including a GUI (Graphical User Interface) for setting a blend ratio of the blended image, and

the display image formation unit forms the blended image on the basis of an input that is made through the GUI included in the display image and that is received by a reception unit configured to receive inputs associated with setting of the blend ratio.

(18) The information processing apparatus according to any one of (1) to (17), further including:
a hue setting unit that sets hues for the depth data according to the depth value range set by the depth value range setting unit.

(19) An information processing method including:

setting a maximum value and a minimum value of depth values of depth data corresponding to image data, to thereby set a depth value range from the minimum value to the maximum value; and

generating a mask for the depth data according to the depth value range thus set.

(20) A program for causing a computer to function as:

a depth value range setting unit that sets a maximum value and a minimum value of depth values of depth data corresponding to image data, to thereby set a depth value range from the minimum value to the maximum value; and

a mask generation unit that generates a mask for the depth data according to the depth value range set by the depth value range setting unit.

[Reference Signs List]

10: Camera
11: Object
12: Object
21: RGB image
22: Depth image
30: Display image
31: Depth image display section
32: Slide bar
33: Knob
34: Knob
35: Minimum value display section
36: Maximum value display section
41: Histogram
51: Slide bar
52: Knob
53: Depth value blend ratio display section
54: RGB blend ratio display section
71: Slide bar
72: Knob
73: Kernel size display section
100: Depth data processing apparatus
101: Filter
102: Automatic depth value range setting unit
103: User depth value range setting unit
104: Hue setting unit
105: Region setting unit
106: GUI processing unit
107: Image formation unit
108: Depth data editing unit
109: 3D data generation unit
150: Bus

151: Input unit
152: Output unit
161: Display unit
162: Storage unit
163: Storage medium
164: Communication unit
201: Filter unit
202: Region extraction unit
203: Erosion processing unit
211: Filter unit
212: Region extraction unit
213: Guided filter
221: Guided filter
222: Region extraction unit
231: Filter unit
232: Region extraction unit
233: Object region extraction unit
234: Region integration unit

**Claims**

1. An information processing apparatus comprising:

   a depth value range setting unit that sets a maximum value and a minimum value of depth values of depth data corresponding to image data, to thereby set a depth value range from the minimum value to the maximum value; and
   a mask generation unit that generates a mask for the depth data according to the depth value range set by the depth value range setting unit.

2. The information processing apparatus according to claim 1, further comprising:

   a display image formation unit that forms a display image including a GUI (Graphical User Interface) for setting the depth value range,
   wherein the depth value range setting unit sets the depth value range on a basis of an input that is made through the GUI included in the display image and that is received by a reception unit configured to receive inputs associated with setting of the depth value range.

3. The information processing apparatus according to claim 2, wherein the GUI includes a slide bar for designating the depth value range according to a position of an operator.

4. The information processing apparatus according to claim 3, wherein the slide bar has an operator whose position designates the maximum value and another operator whose position designates the minimum value.

5. The information processing apparatus according to claim 3, wherein the operator on the slide bar is positioned at equal intervals with respect to distance.

6. The information processing apparatus according to claim 3, wherein the operator on the slide bar is positioned at equal intervals with respect to disparity.

7. The information processing apparatus according to claim 3, wherein the GUI further includes a histogram of the depth values.

8. The information processing apparatus according to claim 1, further comprising:

   a filter unit that performs filtering on the depth data,
   wherein the depth value range setting unit sets the depth value range for the depth data on which the filtering has been performed by the filter unit.

9. The information processing apparatus according to claim 1, wherein the depth value range setting unit automatically sets the depth value range.

10. The information processing apparatus according to claim 1, further comprising:
an erosion processing unit that performs an erosion process for the mask generated by the mask generation unit.

11. The information processing apparatus according to claim 10, further comprising:

a display image formation unit that forms a display image including a GUI (Graphical User Interface) for the erosion process,
wherein the erosion processing unit performs the erosion process on a basis of an input that is made through the GUI and that is received by a reception unit configured to receive inputs associated with setting of the erosion process.

12. The information processing apparatus according to claim 1, further comprising:
a filter unit that performs filtering for aligning an edge of the mask generated by the mask generation unit with that of the image data.

13. The information processing apparatus according to claim 1, further comprising:

a filter unit that performs filtering for aligning an edge of the depth data with that of the image data,
wherein the mask generation unit generates the mask for the depth data subjected to the filtering by the filter unit, according to the depth value range set by the depth value range setting unit.

14. The information processing apparatus according to claim 1, further comprising:

an object region extraction unit that extracts an object region including a predetermined object from the image data; and
a region integration unit that generates a mask corrected in correspondence with the object region within the depth value range, by integrating the mask generated by the mask generation unit with the object region extracted by the object region extraction unit.

15. The information processing apparatus according to claim 1, further comprising:
a display image formation unit that forms a display image including an image indicative of the depth data within the depth value range, by performing a mask process on the depth data by using the mask generated by the mask generation unit.

16. The information processing apparatus according to claim 15, wherein the display image formation unit forms a display image including a blended image that is formed by blending the image indicative of the depth data within the depth value range with an image corresponding to the image data.

17. The information processing apparatus according to claim 16,

wherein the display image formation unit forms a display image including a GUI (Graphical User Interface) for setting a blend ratio of the blended image, and
the display image formation unit forms the blended image on a basis of an input that is made through the GUI included in the display image and that is received by a reception unit configured to receive inputs associated with setting of the blend ratio.

18. The information processing apparatus according to claim 1, further comprising:
a hue setting unit that sets hues for the depth data according to the depth value range set by the depth value range setting unit.

19. An information processing method comprising:

setting a maximum value and a minimum value of depth values of depth data corresponding to image data, to thereby set a depth value range from the minimum value to the maximum value; and
generating a mask for the depth data according to the depth value range thus set.

20. A program for causing a computer to function as:

a depth value range setting unit that sets a maximum value and a minimum value of depth values of depth data corresponding to image data, to thereby set a depth value range from the minimum value to the maximum value; and
a mask generation unit that generates a mask for the depth data according to the depth value range set by the depth value range setting unit.

F I G . 1

DEPTH

EP 4 109 407 A1

FIG.2

EP 4 109 407 A1

FIG.3

EP 4 109 407 A1

# FIG.4

EP 4 109 407 A1

F I G . 5

# F I G . 6

EP 4 109 407 A1

FIG.7

FIG.8

# FIG.9

FIG.10

FIG.11

EP 4 109 407 A1

# FIG.12

FIG.13

FIG.14

EP 4 109 407 A1

# FIG.15

EP 4 109 407 A1

81

```
If (MINIMUM VALUE < DEPTH VALUE, AND DEPTH VALUE < MAXIMUM VALUE)
    MASK PIXEL = 1
Else
    MASK PIXEL = 0
Endif

MASK IMAGE AFTER EROSION = EROSION PROCESS (MASK IMAGE, KERNEL SIZE)

If (EROSION MASK PIXEL == 0)
    DEPTH IMAGE (HUE EXPRESSION) R = 0
    DEPTH IMAGE (HUE EXPRESSION) G = 0
    DEPTH IMAGE (HUE EXPRESSION) B = 0
Else
    NO CHANGE
Endif
```

# FIG.16

EP 4 109 407 A1

FIG.17

# FIG.18

```
  ( START DEPTH DATA PROCESS )
               │
               ▼
┌──────────────────────────────────┐  S101
│    PERFORM FILTERING ON DEPTH DATA │
└──────────────────────────────────┘
               │
               ▼
┌──────────────────────────────────┐  S102
│   AUTOMATICALLY SET DEPTH VALUE RANGE │
└──────────────────────────────────┘
               │
               ▼
┌──────────────────────────────────┐  S103
│       RECEIVE USER OPERATION       │
└──────────────────────────────────┘
               │
               ▼
┌──────────────────────────────────┐  S104
│   MANUALLY SET DEPTH VALUE RANGE   │
└──────────────────────────────────┘
               │
               ▼
┌──────────────────────────────────┐  S105
│             SET HUES               │
└──────────────────────────────────┘
               │
               ▼
┌──────────────────────────────────┐  S106
│        GENERATE MASK DATA          │
└──────────────────────────────────┘
               │
               ▼
┌──────────────────────────────────┐  S107
│        FORM DISPLAY IMAGE          │
└──────────────────────────────────┘
               │
               ▼
┌──────────────────────────────────┐  S108
│     GENERATE PARTIAL DEPTH DATA    │
└──────────────────────────────────┘
               │
               ▼
┌──────────────────────────────────┐  S109
│         GENERATE 3D DATA           │
└──────────────────────────────────┘
               │
               ▼
┌──────────────────────────────────┐  S110
│       DISPLAY DISPLAY IMAGE        │
└──────────────────────────────────┘
               │
               ▼
┌──────────────────────────────────┐  S111
│            STORE DATA              │
└──────────────────────────────────┘
               │
               ▼
┌──────────────────────────────────┐  S112
│          TRANSMIT DATA             │
└──────────────────────────────────┘
               │
               ▼
            ( END )
```

# FIG.19

```
        ( START REGION SETTING PROCESS )
                      │
                      ▼
┌──────────────────────────────────────────┐
│      PERFORM FILTERING ON DEPTH DATA      │ S131
└──────────────────────────────────────────┘
                      │
                      ▼
┌──────────────────────────────────────────┐
│     EXTRACT REGION INCLUDED IN RANGE FROM │ S132
│   MINIMUM VALUE TO MAXIMUM VALUE OF DEPTH │
│   FROM DEPTH DATA, AND GENERATE MASK DATA │
└──────────────────────────────────────────┘
                      │
                      ▼
┌──────────────────────────────────────────┐
│    PERFORM EROSION PROCESS ON MASK DATA   │ S133
└──────────────────────────────────────────┘
                      │
                      ▼
                ( RETURN )
```

# FIG.20

USER INSTRUCTION                    USER INSTRUCTION

DEPTH MAXIMUM VALUE
AND MINIMUM VALUE

DEPTH DATA → [FILTER UNIT] → [REGION EXTRACTION UNIT] → [GUIDED FILTER] → MASK DATA

211          212          213

RGB DATA

105

EP 4 109 407 A1

# F I G . 2 1

```
┌─────────────────────────────────────┐
│    START REGION SETTING PROCESS      │
└─────────────────────────────────────┘
                    ↓
┌─────────────────────────────────────┐ S151
│    PERFORM FILTERING ON DEPTH DATA   │
└─────────────────────────────────────┘
                    ↓
┌─────────────────────────────────────┐ S152
│   EXTRACT REGION INCLUDED IN RANGE   │
│   FROM MINIMUM VALUE TO MAXIMUM      │
│   VALUE OF DEPTH FROM DEPTH DATA,    │
│   AND GENERATE MASK DATA             │
└─────────────────────────────────────┘
                    ↓
┌─────────────────────────────────────┐ S153
│ ALIGN EDGE OF MASK DATA WITH THAT    │
│ OF RGB DATA                          │
└─────────────────────────────────────┘
                    ↓
┌─────────────────┐
│     RETURN      │
└─────────────────┘
```

# F I G . 2 2

# FIG.23

START REGION SETTING PROCESS

ALIGN EDGE OF DEPTH DATA WITH THAT OF RGB DATA  S171

EXTRACT REGION INCLUDED IN RANGE FROM
MINIMUM VALUE TO MAXIMUM VALUE OF DEPTH
FROM DEPTH DATA, AND GENERATE MASK DATA  S172

RETURN

# F I G . 2 4

USER INSTRUCTION

DEPTH MAXIMUM VALUE
AND MINIMUM VALUE

231

DEPTH DATA → FILTER UNIT

232

REGION EXTRACTION UNIT

234

REGION INTEGRATION UNIT → MASK DATA

233

OBJECT REGION EXTRACTION UNIT

RGB DATA

EP 4 109 407 A1

# FIG.25

```
( START REGION SETTING PROCESS )
            │
            ▼
┌──────────────────────────────────────────┐  S191
│     PERFORM FILTERING ON DEPTH DATA       │
└──────────────────────────────────────────┘
            │
            ▼
┌──────────────────────────────────────────┐  S192
│     EXTRACT REGION INCLUDED IN RANGE FROM │
│  MINIMUM VALUE TO MAXIMUM VALUE OF DEPTH  │
│  FROM DEPTH DATA, AND GENERATE MASK DATA  │
└──────────────────────────────────────────┘
            │
            ▼
┌──────────────────────────────────────────┐  S193
│ EXTRACT PREDETERMINED OBJECT REGION FROM  │
│              RGB DATA                     │
└──────────────────────────────────────────┘
            │
            ▼
┌──────────────────────────────────────────┐  S194
│      EXTRACT OBJECT REGION INCLUDED IN    │
│   RANGE FROM MINIMUM VALUE TO MAXIMUM     │
│    VALUE OF DEPTH FROM MASK DATA          │
└──────────────────────────────────────────┘
            │
            ▼
        ( RETURN )
```

# FIG.26

## INTERNATIONAL SEARCH REPORT

| International application No. |
| --- |
| PCT/JP2021/004355 |

**A. CLASSIFICATION OF SUBJECT MATTER**
Int.Cl. G06T11/80(2006.01)i, G06F3/0484(2013.01)i
FI: G06T11/80A, G06F3/0484170
According to International Patent Classification (IPC) or to both national classification and IPC

**B. FIELDS SEARCHED**

Minimum documentation searched (classification system followed by classification symbols)
Int.Cl. G06T11/80, G06F3/0484

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-54337 A (SONY CORPORATION) 16 March 2017 (2017-03-16), paragraphs [0082], [0086]-[0093], [0113]-[0117], [0160]-[0166], [0176], [0185], fig. 9, 10, 15 | 1-5,8-14, 19, 20 |
| Y | | 6, 7, 15-18 |
| Y | JP 5307953 B1 (PANASONIC CORPORATION) 02 October 2013 (2013-10-02), paragraphs [0060]-[0062] | 6 |
| Y | JP 2001-352440 A (OLYMPUS OPTICAL CO., LTD.) 21 December 2001 (2001-12-21), paragraphs [0089]-[0096], fig. 3, 4, 8-10 | 7, 15-18 |
| Y | JP 2019-93152 A (CANON MARKETING JAPAN INC., CANON IT SOLUTIONS INC.) 20 June 2019 (2019-06-20), paragraph [0163], fig. 27 | 16, 17 |
| Y | JP 2019-80206 A (NTT FACILITIES INC.) 23 May 2019 (2019-05-23), paragraph [0076] | 16, 17 |

☒ Further documents are listed in the continuation of Box C.  ☒ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 February 2021 | 09 March 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2021/004355

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-131403 A (TOSHIBA MEDICAL ENG CO., LTD.; TOSHIBA CORPORATION) 28 May 1996 (1996-05-28), paragraph [0040] | 16, 17 |

Form PCT/ISA/210 (second sheet) (January 2015)

INTERNATIONAL SEARCH REPORT
Information on patent family members

International application No.

PCT/JP2021/004355

| JP 2017-54337 A | 16 March 2017 | US 2019/0012796 A1<br>paragraphs [0126], [0130]–[0137],<br>[0158]–[0162], [0207]–[0213],<br>[0223], [0233], fig. 9, 10, 15 |
|---|---|---|
| JP 5307953 B1 | 02 October 2013 | US 2014/0205182 A1<br>paragraphs [0103]–[0108] |
| JP 2001-352440 A | 21 December 2001 | (Family: none) |
| JP 2019-93152 A | 20 June 2019 | (Family: none) |
| JP 2019-80206 A | 23 May 2019 | (Family: none) |
| JP 8-131403 A | 28 May 1996 | (Family: none) |

Form PCT/ISA/210 (patent family annex) (January 2015)

**EP 4 109 407 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3269680 A
- JP 2014067372 A
- JP 2016071645 A